# EUROPEAN PATENT APPLICATION

(11) **EP 4 814 640 A1**
(43) Date of publication of application: **30.09.2026**
(21) Application number: 26167396.6
(22) Date of filing: 24.03.2026
(51) Int. Cl.: G05D 1/20

(54) **TRAVEL CONTROL METHOD FOR WORK VEHICLE, TRAVEL CONTROL PROGRAM, TRAVEL CONTROL SYSTEM, AND WORK VEHICLE**

(30) Priority: 25.03.2025 JP 2025050194; 25.03.2025 JP 2025050195
(71) Applicant: Yanmar Holdings Co., Ltd., Osaka (JP)
(72) Inventor: HOMMA, Terasu, Osaka-shi (JP); OTA, Kohei, Osaka-shi (JP)
(74) Representative: Sekiguchi, Kazuya

(57) **Abstract**

[Problem] To provide a travel control method for a work vehicle, a travel control program, a travel control system, and a work vehicle that can easily alleviate restrictions on a work site where a recovery process can be performed.

[Solution] A travel control method for a work vehicle 1 includes causing a work vehicle 1 to automatically travel along a target path R10 in a work site, and performing a recovery process in a case where a deviation including at least one of a position deviation and an azimuth deviation of the work vehicle 1 with respect to the target path R10 exceeds a threshold when the work vehicle 1 enters the target path R10 from an entry position Pa1 of the target path R10. The recovery process is a process of moving the work vehicle 1 to a recovery position Pr1 where entry into the target path R10 can be started by reducing the deviation. In the recovery process, the distance from the entry position Pa1 of the target path R10 to the recovery position Pr1 is designated as a recovery distance L1, and the recovery position Pr1 is determined according to the recovery distance L1.

## Description

### TECHNICAL FIELD

The present invention relates to a travel control method for a work vehicle, a travel control program, and a travel control system for controlling travel of the work vehicle, and the work vehicle.

### BACKGROUND ART

As a related technique, a travel control system (automatic travel system) that causes a work vehicle to automatically travel along a target path in a work site has been proposed (see, for example, Patent Document 1). According to the travel control system related to the related technique, the work vehicle automatically travels in a predetermined row order while performing predetermined work on work targets disposed in a plurality of rows in the work site. As predetermined work, the work vehicle performs spreading work of spreading a spread substance such as a chemical solution or water onto a work target (crop) planted in the work site (agricultural land).

In the travel control system related to the above related technique, when a deviation including at least one of a position deviation and an azimuth deviation of the work vehicle with respect to the target path exceeds a threshold, a recovery process (correction operation) for correcting the deviation is performed. That is, in a case where the work vehicle greatly deviates from the target path, the travel control system first sets a recovery position (virtual target position) on the extension line of a work path (straight path) of the target path in order to return the work vehicle from an entry position (target position) of the target path to the target path. The travel control system spin-turns the work vehicle in such a manner as to face the recovery position, and moves the work vehicle backward until the work vehicle reaches the recovery position. As a result, the work vehicle can be moved forward from the recovery position to the entry position of the target path along the extension line of the work path, and can enter (return) the target path from the entry position.

### PRIOR ART DOCUMENT

### PATENT DOCUMENT

Patent Document 1: JP-A-2024-128271

### SUMMARY OF INVENTION

### TECHNICAL PROBLEM

In the recovery process, the work vehicle can enter the target path from the entry position by moving the work vehicle in a direction away from the entry position of the target path (toward the outside of the work site), so that a relatively wide space (a headland or the like) is required in the outer peripheral portion of the work site. Therefore, there is a possibility that a work site in which the recovery process can be performed is limited.

In addition, in the related technique described above, when the work vehicle is caused to spin-turn toward the recovery position through the recovery process, for example, a slip or the like occurs in the work vehicle due to an influence of an inclined surface, a muddy surface, a step (including a depression), or the like of an agricultural land, and a position of the work vehicle may greatly deviate. In such a case, when the work vehicle is moved past the recovery position, it is necessary to reverse the direction of the work vehicle by about 180 degrees in order to further move the work vehicle backward to the recovery position, which is inefficient.

An object of the present invention is to provide a travel control method for a work vehicle, a travel control program, a travel control system, and a work vehicle, which can easily alleviate restrictions on a work site where a recovery process can be performed.

Another object of the present invention is to provide a travel control method for a work vehicle, a travel control program, a travel control system, and a work vehicle, which can easily perform a recovery process efficiently.

### SOLUTION TO PROBLEM

A travel control method for a work vehicle according to one aspect of the present invention includes causing a work vehicle to automatically travel along a target path in a work site, and performing a recovery process in a case where a deviation including at least one of a position deviation and an azimuth deviation of the work vehicle with respect to the target path exceeds a threshold when the work vehicle enters the target path from an entry position of the target path. The recovery process is a process of moving the work vehicle to a recovery position where entry into the target path can be started by reducing the deviation. In the recovery process, a distance from the entry position of the target path to the recovery position is designated as a recovery distance, and the recovery position is determined according to the recovery distance.

In addition, the recovery process may be a process of moving the work vehicle to the recovery position where entry into the target path can be started by reducing the deviation, and further moving the work vehicle from the recovery position to the entry position. Further, in the recovery process, a recovery advancing direction which is an advancing direction of the work vehicle until reaching the target position may be set according to at least a positional relationship between an actual position of the work vehicle and a next target position.

A travel control program according to one aspect of the present invention is a control program for causing one or more processors to execute the travel control method for a work vehicle.

A travel control system according to one aspect of the present invention includes a travel processing unit and a recovery processing unit. The travel processing unit causes a work vehicle to automatically travel along a target path in a work site. In a case where a deviation including at least one of a position deviation and an azimuth deviation of the work vehicle with respect to the target path exceeds a threshold when the work vehicle enters the target path from an entry position of the target path, the recovery processing unit moves the work vehicle to a recovery position where entry into the target path can be started by reducing the deviation. The recovery processing unit designates a distance from the entry position of the target path to the recovery position as a recovery distance, and determines the recovery position according to the recovery distance.

In addition, in a case where a deviation including at least one of a position deviation and an azimuth deviation of the work vehicle with respect to the target path exceeds a threshold when the work vehicle enters the target path from an entry position of the target path, the recovery processing unit may perform a recovery process of moving the work vehicle to a recovery position where entry into the target path can be started by reducing the deviation and further moving the work vehicle from the recovery position to the entry position. Furthermore, the recovery processing unit may set a recovery advancing direction which is an advancing direction of the work vehicle until reaching the target position according to at least a positional relationship between an actual position of the work vehicle and a next target position.

A work vehicle according to one aspect of the present invention includes the travel control system and a base machine controlled by the travel control system.

### ADVANTAGEOUS EFFECTS OF INVENTION

According to the present invention, it is possible to provide a travel control method for a work vehicle, a travel control program, a travel control system, and a work vehicle that can easily alleviate restrictions on a work site where a recovery process can be performed.

Further, according to the present invention, it is possible to provide a travel control method for a work vehicle, a travel control program, a travel control system, and a work vehicle that can easily perform a recovery process efficiently.

### BRIEF DESCRIPTION OF DRAWINGS

Fig. 1 is an external view of a work vehicle according to a first embodiment as viewed from a left front side;
Fig. 2 is an external view of a rear surface of the work vehicle according to the first embodiment as viewed from a rear surface side;
Fig. 3 is a diagram showing an example of a crop row for which the work vehicle according to the first embodiment is used;
Fig. 4 is a schematic diagram showing an overall configuration of an automated work system using the work vehicle according to the first embodiment;
Fig. 5 is a schematic block diagram showing a main configuration of the automated work system according to the first embodiment;
Fig. 6 is an external view of a left side surface of the work vehicle according to the first embodiment as viewed from a left side;
Fig. 7 is an external view of a right side surface of the work vehicle according to the first embodiment as viewed from a right side;
Fig. 8 is an external view of an upper surface of the work vehicle according to the first embodiment as viewed from above;
Fig. 9 is an external view of the rear surface of the work vehicle according to the first embodiment as viewed from the rear surface side;
Fig. 10 is a schematic diagram showing the work vehicle according to the first embodiment as viewed obliquely from behind;
Fig. 11 is a schematic diagram for describing an operation of automatic travel of the work vehicle according to the first embodiment;
Fig. 12 is a schematic diagram for describing an operation related to manual travel of the work vehicle according to the first embodiment;
Fig. 13 is a schematic diagram showing an example of an error screen displayed when an operation device of the work vehicle according to the first embodiment is abnormal;
Fig. 14 is a schematic diagram for describing an operation of moving the work vehicle from one work path to another work path in automatic travel of the work vehicle according to the first embodiment;
Fig. 15 is a schematic diagram for describing a recovery process in automatic travel of the work vehicle according to the first embodiment;
Fig. 16 is a schematic diagram for describing a recovery process in automatic travel of the work vehicle according to the first embodiment;
Fig. 17 is a schematic diagram showing an example of a recovery distance setting screen displayable by a control system according to the first embodiment;
Fig. 18 is a schematic diagram for describing a recovery distance shortening process in automatic travel of the work vehicle according to the first embodiment;
Fig. 19 is a flowchart showing an example of a recovery process in automatic travel of the work vehicle according to the first embodiment;
Fig. 20 is a schematic diagram showing an example of a recovery process in automatic travel of the work vehicle according to the first embodiment;
Fig. 21 is a schematic diagram showing an example of a recovery process in automatic travel of the work vehicle according to the first embodiment; and
Fig. 22 is a schematic diagram showing an example of a recovery process in automatic travel of the work vehicle according to the first embodiment.

### DESCRIPTION OF EMBODIMENTS

Hereinafter, an embodiment of the present invention will be described with reference to the accompanying drawings. The following embodiment is an example embodying the present invention, and is not intended to limit the technical scope of the present invention.

### (First Embodiment)

### [1] Overall configuration

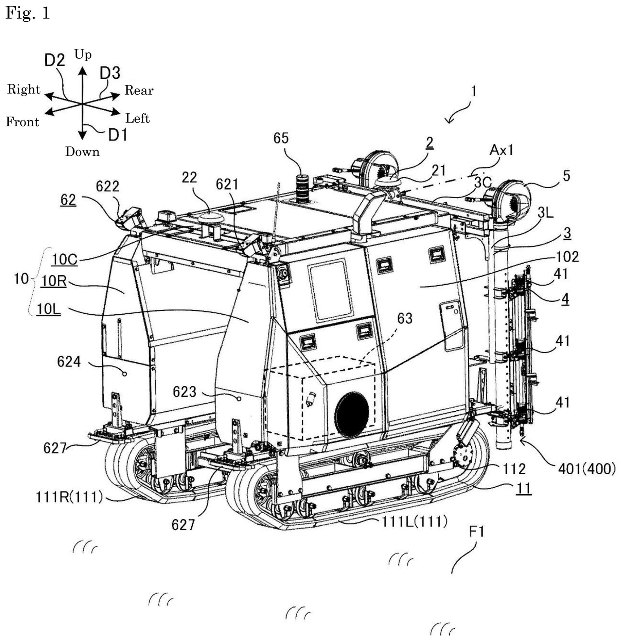

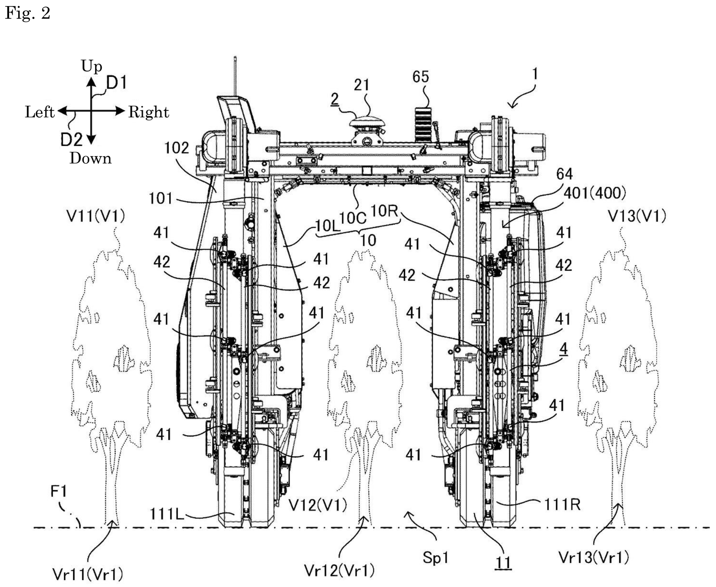

First, an overall configuration of a work vehicle 1 according to the present embodiment will be described with reference to Figs. 1 to 5. In the present embodiment, the work vehicle 1 performs, for example, spreading work of spreading a spread substance such as a chemical solution, water, or a fertilizer to a crop V1 (see Fig. 2) grown on an agricultural land F1 or weeding work of weeding weeds around the crop V1. The work vehicle 1 performs various types of work while automatically traveling along a target path in a work site such as the agricultural land F1.

That is, the work vehicle 1 is configured to be capable of executing spreading work or weeding work as the work. An implement 400 is detachable from (a base machine 10 of) the work vehicle 1, and the work that can be executed by the work vehicle 1 varies depending on the type of the implement 400 mounted on the work vehicle 1. In other words, the implement 400 corresponding to the work executed by the work vehicle 1 is attached to (base machine 10 of) the work vehicle 1.

In the present embodiment, as the implement 400 that can be attached to the work vehicle 1, there is located at least a spreader 401. In addition, for example, the implement 400 such as a weeding machine can be mounted on the work vehicle 1. In a state in which the spreader 401 is attached to the base machine 10 as the implement 400, the work vehicle 1 can perform spreading work. On the other hand, the work vehicle 1 can execute the weeding work in a state in which a weeding machine is attached to the base machine 10 as the implement 400.

The "work vehicle" referred to in the present disclosure includes not only a work vehicle that performs spreading work or weeding work but also a work vehicle that performs various types of work such as a tractor, a rice transplanter, a sprayer, a seeder, a transplanter, and a combine. Furthermore, the "work vehicle" referred to in the present disclosure is not limited to an agricultural machine (farm machine) and may be, for example, a construction machine (heavy equipment). Furthermore, while the work vehicle 1 is an example of a work machine that performs work in a work site, the work machine is not limited to a "vehicle", and may be, for example, a work flying object such as a drone or a multicopter for spreading work, or a work ship.

The "agricultural land" in the present disclosure is an example of a work site in which the work vehicle 1 performs various types of work such as spreading work while being moved, and includes an orchard, a pasture, a rice field, an upland field, and the like on which agricultural products are grown. In this case, the crop V1 grown on the agricultural land F1 is an agricultural product. Furthermore, when trees are grown in a tree farm, the tree farm is the agricultural land F1, and when trees to be used for timber are grown in a forest as in forestry, the forest is the agricultural land F1. In this case, the crop V1 grown on the agricultural land F1 is, for example, plants or trees. However, the work site where the work machine (work vehicle 1) performs work is not limited to the agricultural land F1, and may be a site other than the agricultural land F1. For example, when the work machine (work vehicle 1) is a construction machine, a site where the construction machine performs work is a work site.

In the present embodiment, as an example, the work vehicle 1 as a work machine performs work on the crops V1 grown in the agricultural land F1 while being moved in the agricultural land F1 which is an orchard such as a vineyard or an apple orchard. The crop V1 is an example of a work target on which work such as spreading work is performed by the work vehicle 1 as a work machine, and is, for example, a grapevine.

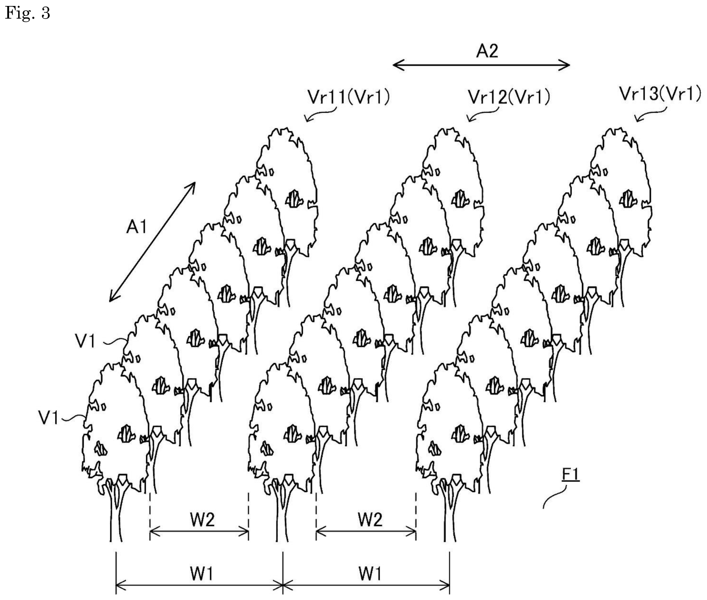

The crop V1 is disposed in a plurality of rows at predetermined intervals on the agricultural land F1. Specifically, as shown in Fig. 3, a plurality of the crops V1 is planted, arranged in straight lines in a vertical direction A1 in plan view. The plurality of crops V1 arranged in straight lines in the vertical direction A1 forms crop rows Vr1. Fig. 3 shows by example three crop rows Vr1 each including six crops V1 arranged in the vertical direction A1. The crop rows Vr1 are disposed with a predetermined pitch W1 in a width direction A2. Consequently, work pathways that have a width W2 (< W1) equal to the intervals between the adjacent crop rows Vr1 and extend along the vertical direction A1 are formed between the crop rows Vr1. The work vehicle 1 spreads the spread substance (chemical solution) onto the crop V1 while being moved (traveling) in the vertical direction A1 along the work pathways. The crop row Vr1 is an example of a work target row including a plurality of crops V1 (work targets) and arranged in a plurality with respect to the agricultural land F1.

The work vehicle 1 spreads the chemical solution onto the crop V1 in a state in which the spreader 401 is attached as the implement 400. In this case, the chemical solution is an example of a spread substance, and the crop V1 on which the spread substance (chemical solution) is spread is an example of a spread target. The "chemical solution" as the spread substance referred to herein is an agricultural chemical that is used for, for example, an improvement in the efficiency of agriculture or the preservation of crops, and includes a herbicide, a bactericide, a fungicide, an insecticide, a herbicide, a rodenticide, and a growth promoter and a germination inhibitor for the crop V1.

As will be described in detail later, the work vehicle 1 traveling in the agricultural land F1 includes the base machine 10 having a gate shape. In other words, the base machine 10 includes a first block 10L and a second block 10R, which are aligned in a left-right direction D2, and a coupling unit 10C that couples the upper ends of the first block 10L and the second block 10R. Consequently, the base machine 10 has a gate frame shape formed by the first block 10L, the second block 10R, and the coupling unit 10C surrounding three sides, that is, the left side, the right side, and the upper side, of a space Sp1. In other words, the space Sp1 that is open in a front-rear direction D3 is formed inside the base machine 10.

The work vehicle 1 further includes a travel unit 11 including a pair of crawlers 111L and 111R arranged in the left-right direction D2. The pair of crawlers 111L and 111R are provided below the first block 10L and the second block 10R, respectively, and are located on both sides of the space Sp1 in the left-right direction D2.

As shown in Fig. 2, the work vehicle 1 can perform work (spreading work or the like) on the crops V1 of the crop row Vr1 and the crops V1 of the crop row Vr1 adjacent to the crop row Vr1 while traveling in a posture of standing astride one crop row Vr1 with the gate-shaped base machine 10. In other words, the work vehicle 1 can travel such that the crop V1 as a work target passes through the space Sp1 inside the base machine 10 formed in a gate shape. That is, as shown in Fig. 2, when there are the crop rows Vr11, Vr12, and Vr13 as the three work target rows arranged in the left-right direction D2, the work vehicle 1 can travel astride any crop row Vr1 among the three crop rows Vr11, Vr12, and Vr13 with the base machine 10.

Here, if the base machine 10 stands astride the central crop row Vr12, the first block 10L travels in the work pathway between the left crop row Vr11 and the crop row Vr12, and the second block 10R travels in the work pathway between the right crop row Vr13 and the crop row Vr12. In this case, in a state in which the spreader 401 is attached as the implement 400, the work vehicle 1 can simultaneously spread the spread substance (chemical solution) to the crop V11 in the crop row Vr11, the crop V12 in the crop row Vr12, and the crop V13 in the crop row Vr13. As described above, the work vehicle 1 according to the present embodiment can simultaneously spread the spread substance (chemical solution) onto the spread targets (crop V1) in the three rows while traveling. Therefore, the efficiency of the spreading work is higher than that of a configuration in which the spread substance is spread on a row-by-row basis.

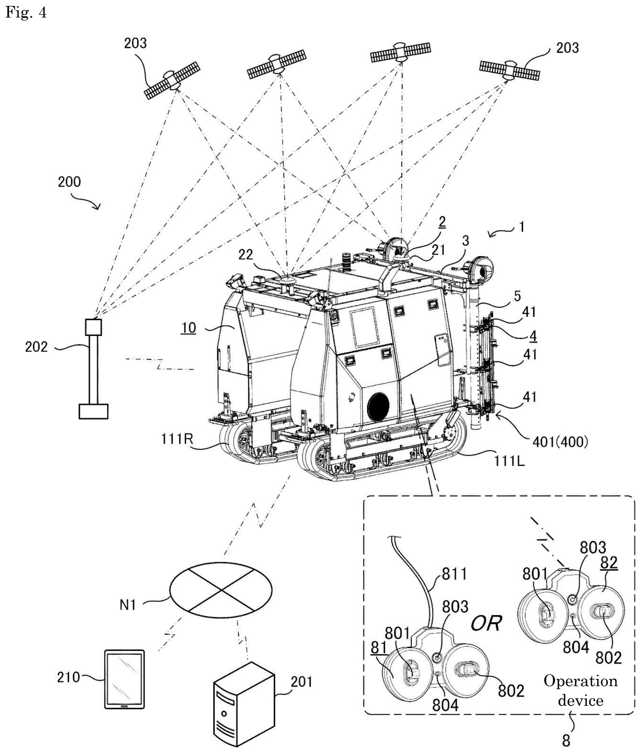

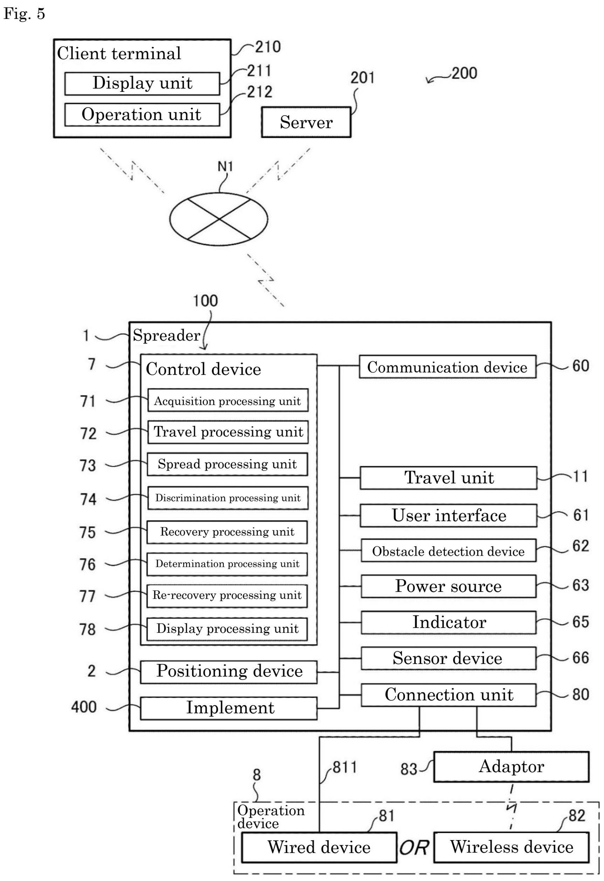

Furthermore, in the present embodiment, as an example, the work vehicle 1 is an unmanned vehicle that operates through automated driving without control (including remote control) of a person (operator). Therefore, as shown in Figs. 4 and 5, the work vehicle 1 configures an automated work system 200 together with a client terminal 210, a server 201, a base station 202, satellites 203, and the like. In other words, the automated work system 200 includes the work vehicle 1, the client terminal 210, the server 201, the base station 202, and the satellites 203. However, at least one of the client terminal 210, the server 201, the base station 202, and the satellites 203 need not be included in the constituents of the automated work system 200, and for example, the automated work system 200 need not include the server 201, the base station 202, and the satellites 203.

The work vehicle 1, the client terminal 210, and the server 201 can communicate with each other. The term "communicable" in the present disclosure indicates that information can be exchanged directly, or indirectly via a communication network (network) N1, a repeater, or the like, in an appropriate communication method for wired or wireless communication (communication using radio waves or light as a medium). The work vehicle 1 and the client terminal 210 can communicate with each other via the communication network N1 such as the Internet, a local area network (LAN), a wide area network (WAN), a public telephone line, a mobile telephone line network, a packet line network, or a wireless LAN. Here, the work vehicle 1 and the client terminal 210 are wirelessly connected to the communication network N1. Therefore, communication between the work vehicle 1 and the client terminal 210 includes at least wireless communication. In addition, each of the work vehicle 1 and the client terminal 210 can wirelessly communicate with the server 201 via the communication network N1.

The satellites 203 are positioning satellites configuring a navigation satellite system such as a Global Navigation Satellite System (GNSS), and transmit GNSS signals (satellite signals). The base station 202 is a reference point (reference station) configuring the navigation satellite system. The base station 202 transmits correction information for calculating the current position and the like of the work vehicle 1 to the work vehicle 1.

The work vehicle 1 according to the present embodiment includes a positioning device 2 that detects, for example, the current position (latitude, longitude, altitude, and the like) and current azimuth of the base machine 10. The positioning device 2 executes a positioning process of specifying (calculating), for example, the current position and current azimuth of the base machine 10 by means of the GNSS signals transmitted from the satellites 203. The positioning device 2 adopts a relatively highly accurate positioning method such as Real Time Kinematic (RTK) positioning of determining the position on the basis of positioning information (such as the GNSS signals) received by two receivers (base station 202 and an antenna 21) and the correction information generated by the base station 202.

The client terminal 210 is, for example, a general-purpose information processing apparatus portable by the operator, such as a smartphone or a tablet terminal. The client terminal 210 is configured to output (transmit) at least a stop instruction (temporary stop instruction) for stopping the automatic travel of the work vehicle 1 to the work vehicle 1 according to the operation of the operator, thereby enabling the remote control of the work vehicle 1. Here, by wirelessly communicating with the work vehicle 1 via the communication network N1, the client terminal 210 can control the work vehicle 1 even in a remote place of the work vehicle 1, that is, in a remote place of the agricultural land F1, as long as the client terminal 210 is in an environment connectable (communicable) to the communication network N1.

As shown in Fig. 5, the client terminal 210 includes a display unit 211 that displays various types of information and an operation unit 212 that receives an operation. The display unit 211 includes, for example, a liquid crystal display or an organic EL display. The operation unit 212 includes, for example, a touch panel, a physical switch, a mouse, and a keyboard. In the present embodiment, as an example, the display unit 211 including a liquid crystal display and the operation unit 212 including a touch panel are integrated to configure a touch panel display. Therefore, the operator can output, for example, a stop instruction (temporary stop instruction) from the client terminal 210 to the work vehicle 1 by operating the operation unit 212 on an operation screen displayed on the display unit 211.

Further, the client terminal 210 has a function of setting (registering) various types of information related to control of the work vehicle 1, such as a target path for automatic travel of the work vehicle 1. That is, the operator can set the target path or the like by operating the operation unit 212 on the operation screen displayed on the display unit 211. Information such as the target path set here is transmitted to the work vehicle 1 directly or indirectly via the server 201 or the like, and is used for automatic travel of the work vehicle 1.

In addition, the client terminal 210 can display, on the display unit 211, various types of information related to the operation of the work vehicle 1, such as the current position, the current azimuth, and the work situation of the work vehicle 1 during the automatic travel of the work vehicle 1. As an example, the client terminal 210 displays, on the display unit 211, a monitoring screen that displays the current position and the like of the work vehicle 1 together with the target path on a map imitating the agricultural land F1, so that the operator can easily visually ascertain the situation of the work vehicle 1. Here, for example, it is preferable that information such as the remaining amount of the chemical solution as a spread substance, the remaining amount of the fuel, and the remaining amount of the battery is also displayed on the monitoring screen.

Furthermore, the automated work system 200 may further include, for example, a wireless communication terminal that can be carried by the operator. The wireless communication terminal is configured to output (transmit) at least a stop instruction (temporary stop instruction) for stopping automatic travel of the work vehicle 1 to the work vehicle 1 in accordance with an operation of the operator, thereby enabling remote control of the work vehicle 1. Here, the wireless communication terminal is configured to be able to communicate with the work vehicle 1 through communication of a different system from the client terminal 210.

As described above, the work vehicle 1 can wirelessly communicate with a plurality of types of operation terminals including at least the client terminal 210 and the wireless communication terminal, and is controlled in accordance with instructions from each of the plurality of types of operation terminals. In other words, each of the client terminal 210 and the wireless communication terminal configures a remote control device (remote controller) capable of remotely controlling the work vehicle 1, and the operator can stop automatic travel of the work vehicle 1 even at a place distant from the work vehicle 1.

The server 201 is an information processing device such as a server device. The server 201 transmits information such as a target path for causing the work vehicle 1 to automatically travel to the work vehicle 1.

The work vehicle 1 according to the present embodiment can also be operated through manual driving by the operator. Therefore, as shown in Figs. 4 and 5, the work vehicle 1 is configured to be connectable to an operation device for manual driving (manual operation device) 8. The operation device 8 is a device for manually controlling the work vehicle 1. The operation device 8 receives an operation for manual driving by the operator and outputs an operation signal corresponding to the operation to the work vehicle 1. The work vehicle 1 acquires the operation signal output from the operation device 8 according to the operation of the operator by using a control device 7 (see Fig. 5), and operates (manually travels) according to the operation signal. The operation device 8 may configure the automated work system 200 together with the client terminal 210 and the like, or need not be included in the constituents of the automated work system 200.

Here, the operation device 8 is alternatively selected from two types of devices, the wired device 81 and the wireless device 82. That is, one of the wired device 81 and the wireless device 82 is selected as the operation device 8 and connected to the work vehicle 1. Specifically, as shown in Fig. 5, the work vehicle 1 includes a single connection unit 80. One of the wired device 81 and the wireless device 82 can be connected to the connection unit 80 as the operation device 8.

The wired device 81 includes a cable 811 having a sufficient length, and is connected to a counterpart device by wire via the cable 811. In the present embodiment, the wired device 81 is connected to the connection unit 80 of the work vehicle 1 by wire. The connection unit 80 is a connector for detachably wired connection of the wired device 81, and (a connector of) a distal end portion of the cable 811 of the wired device 81 is connected to connect the wired device 81 to the work vehicle 1 by wire.

The term "wired connection" used in the present disclosure indicates that the work vehicle 1 is physically connected by a connection medium such as the cable 811, and in the present embodiment, the wired device 81 is connected to (connection unit 80 of) the work vehicle 1 by wire to enable wired communication with the work vehicle 1. Examples of the cable 811 include a conductor cable (copper cable), and an optical fiber cable. In the present embodiment, the cable 811 is a conductor cable such as a twisted pair cable. Therefore, the wired device 81 is electrically connected to (connection unit 80 of) the work vehicle 1.

The "wired communication" in the present disclosure is communication in which signals are exchanged between two parties connected with a connection medium such as the cable 811 as a transmission medium. In the present embodiment, since the cable 811 is a conductor cable, the wired device 81 and the work vehicle 1 perform wired communication by using an electric signal (voltage signal/current signal or the like) passing through the cable 811 that is a transmission medium. In a case where the cable 811 is an optical fiber cable, the wired device 81 and the work vehicle 1 perform wired communication by using an optical signal passing through the cable 811 that is a transmission medium.

The wireless device 82 is a device wirelessly connected to a counterpart device. In the present embodiment, the wireless device 82 is wirelessly connected to an adapter 83 (see Fig. 5) that is connected to the connection unit 80 of the work vehicle 1 by wire. The adapter 83 is a device (converter) for connecting the wireless device 82 to the connection unit 80, and is connected to the connection unit 80 by wire and wirelessly connected to the wireless device 82. The wireless device 82 is connected to the work vehicle 1 via the adapter 83 by being wirelessly connected to the adapter 83 connected to the connection unit 80 by wire.

The term "wireless connection" used in the present disclosure indicates that connection is achieved in a wireless communicable state without being physically connected via a connection medium such as the cable 811. In the present embodiment, the wireless device 82 is wirelessly connected to the adapter 83 connected to (connection unit 80 of) the work vehicle 1 by wire, so that the wireless device 82 can communicate with the work vehicle 1 via the adapter 83. Specifically, wired communication between the work vehicle 1 and the adapter 83 and wireless communication between the wireless device 82 and the adapter 83 enable the wireless device 82 to communicate with the work vehicle 1 via the adapter 83. In the present embodiment, the adapter 83 is connected to (connection unit 80 of) the work vehicle 1 by wire via a conductor cable such as a twisted pair cable, and is electrically connected to (connection unit 80 of) the work vehicle 1.

The term "wireless communication" used in the present disclosure is communication for exchanging signals between two wirelessly connected parties by using radio waves, light (infrared rays, visible light, or the like), ultrasonic waves, or the like as a transmission medium. In the present embodiment, as an example, the wireless device 82 and the adapter 83 perform communication on the basis of wireless communication using radio waves as a transmission medium in compliance with a standard such as Wi-Fi (registered trademark), Bluetooth (registered trademark), or low-power radio (specified low-power radio) that does not require a license. The present disclosure is not limited thereto, and the wireless device 82 and the adapter 83 may perform wireless communication by using light such as infrared rays as a transmission medium, for example.

As described above, the connection unit 80 of the work vehicle 1 connects (wired connection or wireless connection) one of the wired device 81 and the wireless device 82, and enables communication (wired communication or wireless communication) between the connected device (wired device 81 or the wireless device 82) and the work vehicle 1. In the present embodiment, the connection unit 80 is a connector that enables wired connection of the wired device 81, and enables wired connection of the adapter 83 instead of the wired device 81, thereby enabling connection of the wireless device 82 (wirelessly connected to the adapter 83) via the adapter 83.

As a result, two types of devices including the wired device 81 and the wireless device 82 can be connected to the work vehicle 1 by using the single connection unit 80 provided in the work vehicle 1. Therefore, the number of components can be reduced compared with a case where separate connection units adapted to the wired device 81 and the wireless device 82 are provided. Furthermore, the wireless device 82 can also be connected, by using the adapter 83, to the existing work vehicle 1 including the connection unit 80 to which the wired device 81 can be connected by using the connection unit 80.

Here, the wired device 81 and the wireless device 82 configure the operation device 8 for operating the work vehicle 1. That is, in a state in which the wired device 81 is connected to the connection unit 80 of the work vehicle 1, the wired device 81 is used as the operation device 8 for an operation for manual driving of the work vehicle 1 by the operator. On the other hand, in a state in which the wireless device 82 is connected (via the adapter 83) to the connection unit 80 of the work vehicle 1, the wireless device 82 is used as the operation device 8 for an operation for manual driving of the work vehicle 1 by the operator.

Upon receiving the operation of the operator, the operation device 8 including the wired device 81 or the wireless device 82 transmits an operation signal corresponding to the operation to the work vehicle 1. Therefore, the work vehicle 1 operates (manually travels) according to the operation signal.

In the present embodiment, the wired device 81 is connected to the connection unit 80 of the work vehicle 1 by the cable 811 having a sufficient length, and the wireless device 82 is wirelessly connected to the adapter 83 connected to the connection unit 80 of the work vehicle 1 by wire. Therefore, the operation device 8 can be used at a position away from the base machine 10 of the work vehicle 1 regardless of whether the operation device 8 is the wired device 81 or the wireless device 82. Thus, the operator can operate the work vehicle 1 manually by means of the operation device 8 without boarding the base machine 10 of the work vehicle 1, for example, while standing around the base machine 10, that is, from outside the base machine 10. In short, the operation device 8 can be operated outside the base machine 10. Therefore, for example, when loading and unloading the work vehicle 1 onto and from a haul vehicle, the operator can manually operate the work vehicle 1 at a safe place outside the base machine 10.

Moreover, in the present embodiment, for convenience of description, a vertical direction in a state in which the work vehicle 1 can be used is defined as an up-down direction D1 as shown in Fig. 1. Furthermore, the left-right direction D2 and the front-rear direction D3 are defined relative to a direction as viewed from the center point of the work vehicle 1 in plan view. That is, the advancing direction of the work vehicle 1 when the work vehicle 1 is moved forward is the front side in the front-rear direction D3, and the advancing direction of the work vehicle 1 when the work vehicle 1 is moved backward is the rear side in the front-rear direction D3. However, these directions are not intended to limit the use direction (a direction at the time of use) of the work vehicle 1.

### [2] Details of work vehicle

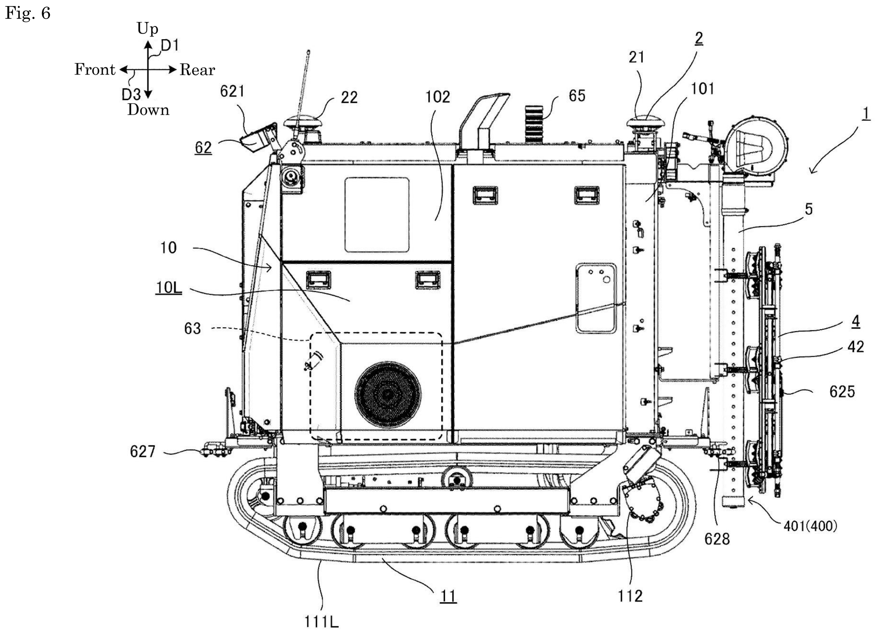

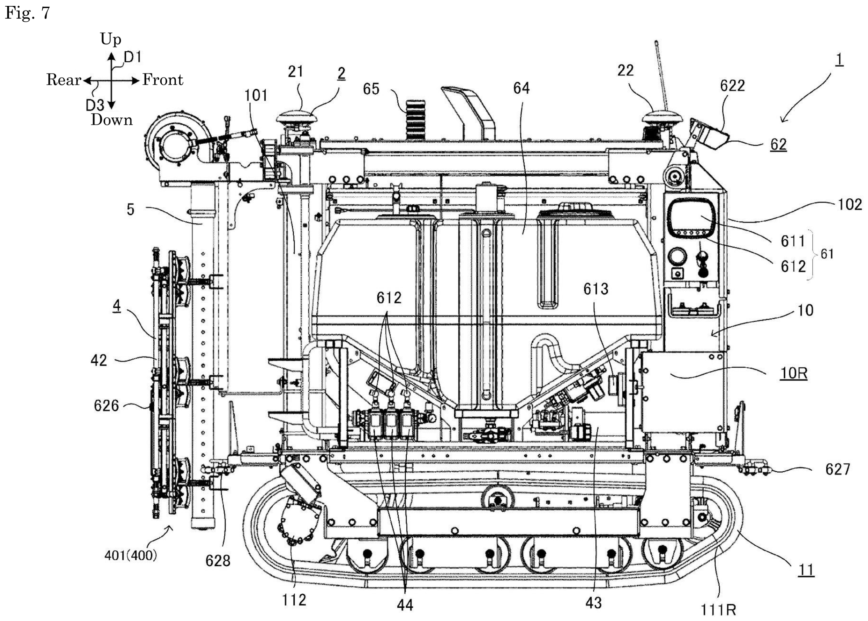

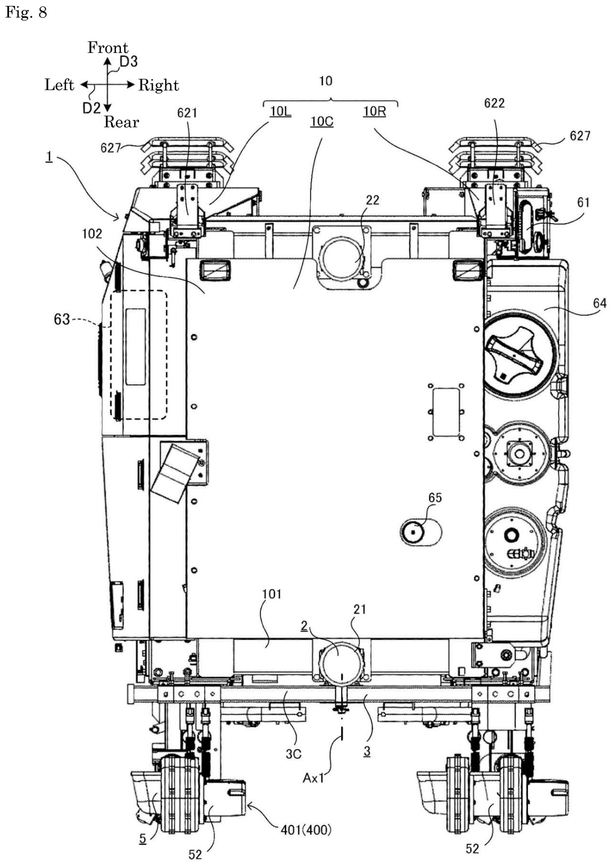

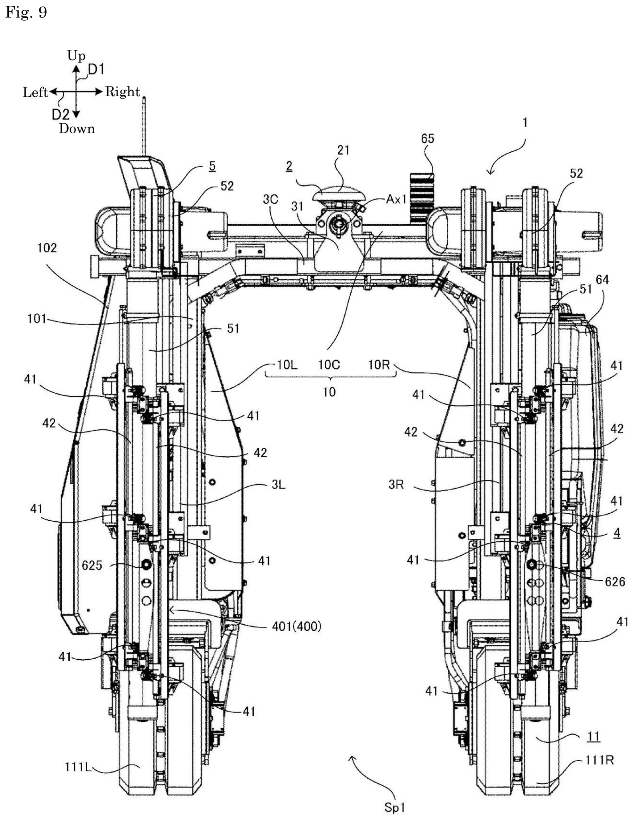

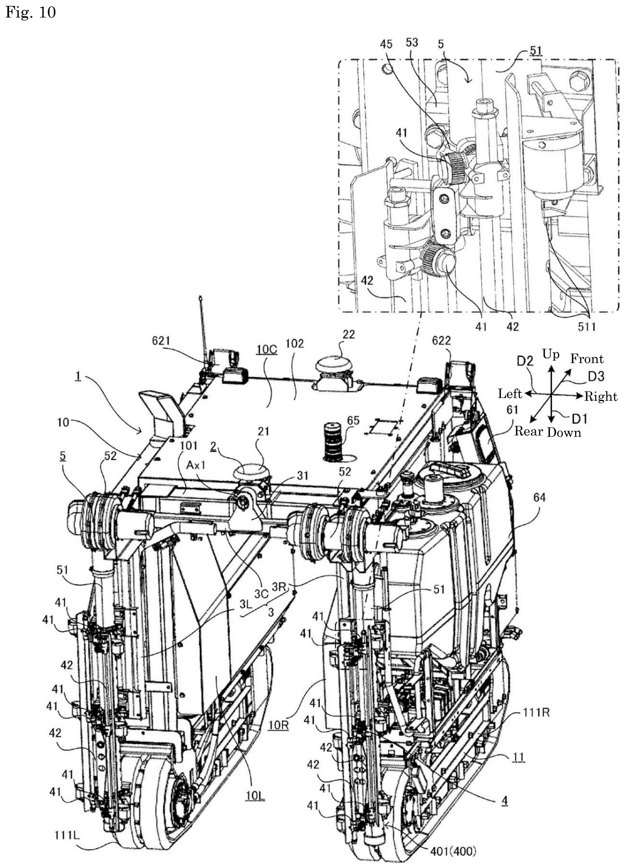

Next, a configuration of the work vehicle 1 will be described in more detail with reference to Figs. 1, 2, and 5 to 10. Fig. 1 is an external view of the work vehicle 1 as viewed from a left front side, and Fig. 2 is an external view of a rear surface of the work vehicle 1 as viewed from a back side (rear side). Fig. 5 is a schematic block diagram showing a main configuration of the work vehicle 1. Fig. 6 is an external view of a left side surface of the work vehicle 1 as viewed from the left side, Fig. 7 is an external view of a right side surface of the work vehicle 1 as viewed from the right side, and Fig. 8 is an external view of an upper surface of the work vehicle 1 as viewed from above. Fig. 9 is an external view of the rear surface of the work vehicle 1 as viewed from the back side (rear side). Fig. 10 is a schematic diagram showing the work vehicle 1 as viewed obliquely from the rear, and a partially enlarged view is shown in the callout.

The work vehicle 1 includes a base machine 10, a travel unit 11, a support frame 3, and an implement 400. The implement 400 is detachably attached to the base machine 10, and the implement 400 is detachable to the work vehicle 1. As the implement 400 attachable to the base machine 10, in the present embodiment, there is at least the spreader 401 as described above. Hereinafter, a case where the spreader 401 is attached to the base machine 10 as the implement 400 and the work vehicle 1 executes spreading work will be described as an example.

In the present embodiment, as shown in Fig. 5, the work vehicle 1 further includes a positioning device 2, a control device 7, an operation device 8, a communication device 60, a user interface 61, an obstacle detection device 62, a power source 63, a tank 64 (see Fig. 7), an indicator 65, a sensor device 66, and the like. The work vehicle 1 further includes a fuel tank, a battery, and the like. In the present embodiment, the structures of the work vehicle 1, such as the base machine 10 and the support frame 3, are basically made of metal, and the material thereof is selected according to, for example, required strength and weather resistance. However, the structure of the work vehicle 1 is not limited to being made of metal, and for example, resin, wood, or the like may be appropriately used.

### Specific configuration other than implement

First, a specific configuration of the work vehicle 1 excluding the implement 400 will be described.

The base machine 10 is a main body of the work vehicle 1, and supports most constituents of the work vehicle 1 such as the positioning device 2 and the support frame 3. The base machine 10 includes a frame 101 (refer to Fig. 2) and a cover 102. The frame 101 is a member forming a framework of the base machine 10, and supports heavy objects such as the power source 63 and the tank 64. The cover 102 is a member forming an outer shell of the base machine 10, and is attached to the frame 101 in such a manner as to cover at least a part of the frame 101 and members mounted on the frame 101. On a part of the rear surface (back surface) and right side surface of the base machine 10, the frame 101 is not covered with the cover 102, and is exposed. The cover 102 is divided into a plurality of parts, and the plurality of parts is structured in such a manner as to be individually removable from the frame 101. Hence, for example, only parts of the cover 102, the parts corresponding to some devices (members) such as the power source 63, can be removed. Consequently, some devices (members) such as the power source 63 can be exposed.

As described above, the base machine 10 includes the first block 10L and the second block 10R, which are aligned in the left-right direction D2. The first block 10L and the second block 10R face each other, spaced a distance of a certain value or more apart in the left-right direction D2. In the present embodiment, as an example, the first block 10L is located on the left side, and the second block 10R is located on the right side. Hence, the left part of the base machine 10 serves as the first block 10L, and the right part of the base machine 10 serves as the second block 10R. Furthermore, the base machine 10 includes the coupling unit 10C that couples the first block 10L and the second block 10R. In front view (as viewed from the front), the coupling unit 10C is long in the left-right direction D2, and each of the first block 10L and the second block 10R is long in the up-down direction D1.

Here, the coupling unit 10C couples the upper ends of the first block 10L and the second block 10R to each other. In other words, the first block 10L and the second block 10R each protrude downward from two ends (in the left-right direction D2) of the coupling unit 10C. Consequently, the base machine 10 has a gate shape formed by the first block 10L, the second block 10R, and the coupling unit 10C, the gate shape opening downward in addition to opening to each side in the front-rear direction D3. The space Sp1 that is surrounded on the three sides by the first block 10L, the second block 10R, and the coupling unit 10C and opens in the front-rear direction D3 is formed inside the base machine 10.

In short, as shown in Fig. 2, the base machine 10 forms, between the first block 10L and the second block 10R, the space Sp1 through which the crop V1 (work target) targeted for the work (spreading work) by the implement 400 (here, the spreader 401) passes. Specifically, the dimensions of each unit of the base machine 10 are set in such a manner as to form the space Sp1 having a height and width that are equal to or greater than a standard size of the crop V1 that is a spread target. Hence, as long as the crop V1 has a standard size, the base machine 10 can allow the crop V1 to pass through the space Sp1 while standing astride the crop V1 with clearance of a predetermined value or greater to prevent the crop V1 from coming into contact with the base machine 10. While the crops V1 are passing through the space Sp1, the first block 10L is located to the left of the crops V1, the second block 10R is located to the right of the crops V1, and the coupling unit 10C is located above the crops V1.

More specifically, in the present embodiment, the base machine 10 is configured substantially symmetrically in the left-right direction D2. The first block 10L and the second block 10R are formed into a rectangular shape having approximately the same size and shape in side view. The first block 10L and the second block 10R each have a shape that is flat in the left-right direction D2, the smallest dimension of which is in the left-right direction D2 among the up-down direction D1, the left-right direction D2, and the front-rear direction D3. Moreover, in each of the first block 10L and the second block 10R, a part above the central part in the up-down direction D1 is formed into a tapered shape that reduces in the dimension in the left-right direction D2 toward the upper end. The coupling unit 10C is formed into a rectangular shape having a larger dimension in the front-rear direction D3 than in the left-right direction D2 in plan view. The coupling unit 10C has a shape that is flat in the up-down direction D1, the smallest dimension of which is in the up-down direction D1 among the up-down direction D1, the left-right direction D2, and the front-rear direction D3.

As described above, the base machine 10 can be roughly divided into three parts (blocks): the first block 10L, the second block 10R, and the coupling unit 10C. Each of the first block 10L, the second block 10R, and the coupling unit 10C includes the frame 101 and the cover 102. In other words, each of the first block 10L and the second block 10R includes the frame 101 and the cover 102. Furthermore, most of the constituents of the work vehicle 1 such as the positioning device 2 and the support frame 3 are provided in the first block 10L, the second block 10R, and the coupling unit 10C in a distributed manner.

The travel unit 11 is a traveling device (vehicle body) that causes the work vehicle 1 to travel, and is provided in a lower portion of the base machine 10. The travel unit 11 causes the base machine 10 to perform travel (including a turn) on the ground. Therefore, the base machine 10 is movable on the agricultural land F1 in the left-right direction D2 and in the front-rear direction D3. Since the travel unit 11 is provided in the base machine 10, the work vehicle 1 can perform work while being moved in the agricultural land F1.

The travel unit 11 includes a pair of crawlers 111L and 111R arranged in the left-right direction D2 (see Fig. 1). The pair of crawlers 111L and 111R are spaced a fixed distance apart in the left-right direction D2. The space Sp1 for allowing the crop V1 that is a work target to pass through is formed between the pair of crawlers 111L and 111R. In other words, the left crawler 111L located to the left of the space Sp1 and the right crawler 111R located to the right of the space Sp1 face each other across the space Sp1. When the left crawler 111L and the right crawler 111R are not particularly distinguished, the crawlers 111L and 111R are also simply referred to as the "crawlers 111". The travel unit 11 includes motors 112 (see Fig. 1) that drive the crawlers 111. In other words, the travel unit 11 is a crawler (tracked) traveling device that causes the motors 112 to drive the endless belt-shaped crawlers 111, thereby causing the work vehicle 1 to travel.

Here, at least two motors 112 are provided for the pair of crawlers 111L and 111R. The left motor 112 that drives the left crawler 111L and the right motor 112 that drives the right crawler 111R can drive the crawlers 111 individually. In the present embodiment, as an example, the motors 112 are hydraulic motors (hydraulic actuators). Hydraulic fluid is supplied from a hydraulic pump to the motors 112 to drive the crawlers 111. According to this configuration, even if the road condition of the agricultural land F1 is bad, the base machine 10 can travel relatively stably.

Here, the crawlers 111 and the motors 112 are provided at lower portions of the first block 10L and the second block 10R. That is, the first block 10L includes the left crawler 111L and the motor 112 that drives the crawler 111L, and the second block 10R includes the right crawler 111R and the motor 112 that drives the crawler 111R. In the present embodiment, the pair of crawlers 111L and 111R and the pair of motors 112 are configured substantially symmetrically in the left-right direction D2. As described above, the pair of travel units 11 are spaced a distance equal to the space Sp1 apart in the left-right direction D2. Therefore, the work vehicle 1 can travel in a relatively stable posture in various road conditions of the agricultural land F1 including a horizontally inclined surface that is lower in one side in the left-right direction D2.

Here, the pair of crawlers 111L and 111R is driven by power from the power source 63 in a state in which the speed can be varied independently by a hydrostatic continuously variable transmission. Thus, the base machine 10 enters a forward moving state of moving straight in a forward direction by driving the pair of crawlers 111L and 111R at equal speeds in the forward direction, and enters a backward moving state of moving straight in a backward direction by driving the pair of crawlers 111L and 111R at equal speeds in the backward direction. Moreover, the base machine 10 enters a forward turning state of turning while moving forward by driving the pair of crawlers 111L and 111R at unequal speeds in the forward direction, and enters a backward turning state of turning while moving backward by driving the pair of crawlers 111L and 111R at unequal speeds in the backward direction. Moreover, the base machine 10 enters a pivot-turning state by driving one of the pair of crawlers 111L and 111R while stopping the drive of the other crawler 111, and enters a spin-turning state by driving the pair of crawlers 111L and 111R at equal speeds in the forward direction and in the backward direction. Moreover, the base machine 10 enters a travel stop state by stopping the drive of the pair of crawlers 111L and 111R.

Moreover, for example, the power source 63 is mounted in the first block 10L, and, for example, the tank 64 is mounted in the second block 10R. As described above, the constituents of the work vehicle 1 are distributed and arranged in the first block 10L and the second block 10R of the base machine 10, whereby the balance of the work vehicle 1 in the left-right direction D2 is equalized and the center of gravity of the work vehicle 1 is lowered. As a result, the work vehicle 1 can stably travel on an inclined surface or the like of the agricultural land F1.

As described above, the positioning device 2 is a device that detects, for example, the current position and current azimuth of the base machine 10. The positioning device 2 includes at least the antenna 21. The antenna 21 receives, for example, the GNSS signals transmitted from the satellites 203. That is, the antenna 21 includes a position specifying antenna for specifying the position of the base machine 10. Here, the antenna 21 is disposed on the top surface (upper surface) of the base machine 10 in such a manner as to facilitate the reception of the signals (GNSS signals) from the satellites 203. In other words, the antenna 21 is disposed in a position higher than the highest position of the base machine 10. Furthermore, the positioning device 2 includes a posture detection unit that detects the posture of the base machine 10.

In the present embodiment, the positioning device 2 further includes an antenna 22 that is a second antenna, in addition to the antenna 21 that is a first antenna. The positioning device 2 receives, for example, the GNSS signals through each of the two antennas 21 and 22. Here, the antenna 22 (second antenna) is aligned with the antenna 21 (first antenna) in the front-rear direction D3. Consequently, the positioning device 2 can transmit and receive the signals (such as the GNSS signals) through each of the antennas 21 and 22. In particular, if the antennas 21 and 22 are position specifying antennas, the current positions of the front and rear parts of the base machine 10 can be specified; therefore, it is also possible to specify the orientation (current azimuth) of the base machine 10 in addition to the current positions.

The support frame 3 is a member that is attached to one end of the base machine 10 in the front-rear direction D3 and supports the implement 400 (the spreader 401 or the weeding machine 402). In the present embodiment, the support frame 3 is attached to the rear end of the base machine 10. As in the base machine 10, the support frame 3 has a gate shape, and is disposed in a position overlapping the base machine 10 in back view (as viewed from behind). In other words, the support frame 3 includes a vertical frame 3L (a first vertical frame) and a vertical frame 3R (a second vertical frame), which are aligned in the left-right direction D2, and a horizontal frame 3C coupling the upper ends of the vertical frame 3L and the vertical frame 3R. Consequently, the vertical frame 3L, the vertical frame 3R, and the horizontal frame 3C of the support frame 3 form a gate shape that surrounds the three sides, that is, the left side, the right side, and the upper side, of the space Sp1.

Specifically, the support frame 3 includes the vertical frame 3L and the vertical frame 3R, which are aligned in the left-right direction D2. The vertical frame 3L and the vertical frame 3R face each other, spaced a distance of a certain value or more apart in the left-right direction D2. In the present embodiment, as an example, the vertical frame 3L is located on the left side, and the vertical frame 3R is located on the right side. Hence, the vertical frame 3L is located behind the first block 10L of the base machine 10, and the vertical frame 3R is located behind the second block 10R of the base machine 10. In back view (as viewed from behind), the horizontal frame 3C is long in the left-right direction D2, and the vertical frame 3L and the vertical frame 3R are long in the up-down direction D1.

Here, the horizontal frame 3C couples the upper ends of the vertical frame 3L and the vertical frame 3R. In other words, the vertical frame 3L and the vertical frame 3R protrude downward from two ends (in the left-right direction D2) of the horizontal frame 3C, respectively. In this manner, the support frame 3 includes the horizontal frame 3C that is long in the left-right direction D2 and the pair of vertical frames 3L and 3R that are long in the up-down direction D1 and protrude downward from the two ends of the horizontal frame 3C, respectively. Consequently, the support frame 3 has a gate shape formed by the vertical frame 3L, the vertical frame 3R, and the horizontal frame 3C, the gate shape that is open downward in addition to opening to each side in the front-rear direction D3. The space Sp1 that is surrounded on the three sides by the vertical frame 3L, the vertical frame 3R, and the horizontal frame 3C and opens in the front-rear direction D3 is formed inside the support frame 3.

In short, the support frame 3 forms the space Sp1 between the pair of vertical frames 3L and 3R through which the crop V1 (work target) that is a work target passes. Specifically, the dimensions of each unit of the support frame 3 are set in such a manner as to form the space Sp1 having a height and width that are equal to or greater than the standard size of the crop V1 that is a work target. Hence, as long as the crops V1 have the standard size, the support frame 3 can allow the crops V1 to pass through the space Sp1 while standing astride the crops V1 with a clearance of a predetermined value or greater to prevent the crops V1 from coming into contact with the support frame 3. While the crops V1 are passing through the space Sp1, the vertical frame 3L is located to the left of the crops V1, the vertical frame 3R is located to the right of the crops V1, and the horizontal frame 3C is located above the crops V1.

More specifically, in the present embodiment, the support frame 3 is structured substantially symmetrically in the left-right direction D2. The vertical frame 3L and the vertical frame 3R have a cylindrical shape that is circular in cross section. In the present embodiment, as an example, each of the vertical frame 3L and the vertical frame 3R includes two cylindrical members arranged side by side. The horizontal frame 3C has a rectangular tubular shape that is rectangular in cross section. Here, the vertical frame 3L and the vertical frame 3R are firmly fixed to the horizontal frame 3C by appropriate fixing means such as coupling fittings, brace fittings, or welding. Hence, each of the vertical frame 3L and the vertical frame 3R maintains a state of being orthogonal to the horizontal frame 3C. In other words, in back view, each of a corner between the vertical frame 3L and the horizontal frame 3C and a corner between the vertical frame 3R and the horizontal frame 3C has a right angle.

Moreover, in the present embodiment, the support frame 3 is supported by the base machine 10 in such a manner as to be rotatable about a rotation axis Ax1 (see Figs. 8 and 9) while maintaining a relative positional relationship between the pair of vertical frames 3L and 3R and the horizontal frame 3C. The rotation axis Ax1 is an axis passing through a support portion 31 provided to the horizontal frame 3C and extending in the front-rear direction D3. That is, the support frame 3 supporting the implement 400 is supported by the base machine 10 in such a manner as to be rotatable about the rotation axis Ax1 along the front-rear direction D3. Here, the term "rotation axis" referred to in the present disclosure is a virtual axis (straight line) that is the center of the rotational motion of a solid of revolution. In other words, the rotation axis Ax1 is a virtual axis without material substance. However, the rotation axis Ax1 may be a member with material substance such as a hinge pin.

The communication device 60 is a communication interface for executing data communication according to a predetermined communication protocol with external devices such as the server 201 and the client terminal 210.

The user interface 61 is a device that performs at least one of output of information to a user and reception of an operation. Here, as shown in Fig. 7, the user interface 61 includes a display unit 611 such as a liquid crystal display or an organic EL display that displays various types of information, and an operating unit 612 such as a touchscreen, a knob, or a push button switch that receives an operation. An operator being an example of the user can operate the operating unit 612 in accordance with an operation screen displayed on the display unit 611 to perform various settings. Specifically, the operator operates the operating unit 612 of the user interface 61 and sets, for example, operating conditions of the implement 400. Examples of the operating conditions of the implement 400 include a pressure (injection pressure) and a flow rate when the spread substance is spread from a spread nozzle 41 of the spreader 401.

The obstacle detection device 62 includes a first detection unit 621 and a second detection unit 622. Both the first detection unit 621 and the second detection unit 622 are disposed toward the front of the base machine 10. The first detection unit 621 is disposed at the left front end of the upper surface of the base machine 10, and the second detection unit 622 is disposed at the right front end of the upper surface of the base machine 10. That is, the obstacle detection device 62 is mounted on the base machine 10 of the work vehicle 1, and includes a plurality of detection units (first detection unit 621 and the second detection unit 622) disposed to be spaced apart in the width direction (left-right direction D2) orthogonal to the advancing direction (front-rear direction D3) of the work vehicle 1 in plan view.

Each of the first detection unit 621 and the second detection unit 622 includes a sensor such as light detection and ranging (LiDAR), for example, and detects a surrounding situation of the base machine 10. In the present embodiment, as an example, each of the first detection unit 621 and the second detection unit 622 is a three-dimensional sensor that measures a distance to each measurement point (measurement target) within a measurement range by using the time of flight (TOF) method of measuring a distance to a measurement point on the basis of a round-trip time it takes for light or sound to travel to and back from the measurement point. Examples of the surrounding situation of the base machine 10 include the presence or absence of an object (such as an obstacle) that is present ahead of the base machine 10 in the advancing direction, and the position (distance and azimuth) of the object.

The obstacle detection device 62 further includes a first sensor 623 (see Fig. 1), a second sensor 624 (see Fig. 1), a third sensor 625 (see Fig. 6), and a fourth sensor 626 (see Fig. 7). The first sensor 623 and the second sensor 624 are both disposed toward the front of the base machine 10, and the third sensor 625 and the fourth sensor 626 are both disposed toward the rear of the base machine 10. The first sensor 623 is disposed on the front surface of the first block 10L, and the second sensor 624 is disposed on the front surface of the second block 10R. The third sensor 625 is attached to the vertical frame 3L. The fourth sensor 626 is attached to the vertical frame 3R.

Each of the first sensor 623 to the fourth sensor 626 includes, for example, a sensor such as a sonar sensor, a radar, or a LiDAR, and detects a surrounding situation of the base machine 10. In the present embodiment, as an example, each of the first sensor 623 to the fourth sensor 626 is a three-dimensional sensor that measures a distance to each measurement point (measurement target) within a measurement range by using the time of flight (TOF) method of measuring a distance to a measurement point on the basis of a round-trip time it takes for light or sound to travel to and back from the measurement point. Examples of the surrounding situation of the base machine 10 include the presence or absence of an object (such as an obstacle) that is present ahead of the base machine 10 in the advancing direction, and the position (distance and azimuth) of the object.

Moreover, the obstacle detection device 62 further includes front contact sensors 627 and back contact sensors 628. A pair of the left and right front contact sensors 627 is disposed at the front of the base machine 10, and a pair of the left and right back contact sensors 628 is disposed at the back of the base machine 10. Each of the front contact sensors 627 and the back contact sensors 628 detects an obstacle when coming into contact with the obstacle. Each of the sensors transmits a detection signal to the control device 7 when detecting an obstacle.

The power source 63 is a drive source that supplies power to at least the travel unit 11. The power source 63 includes an engine such as a diesel engine. The power source 63 drives the hydraulic pump and supplies the hydraulic fluid from the hydraulic pump to, for example, the motors 112 of the travel unit 11 to drive, for example, the travel unit 11. Electronic devices such as the positioning device 2, the control device 7, and the communication device 60 are connected to the battery and can operate even during shutdown of the power source 63.

The tank 64 stores the spread substance such as a chemical solution. The spread substance stored in the tank 64 is supplied to the spreader 401, and spread from the spread nozzle 41 of the spreader 401. The tank 64 can be refilled with a chemical solution that is the spread substance from the outside. The capacity of the tank 64 is, for example, approximately 200 L.

The indicator 65 is disposed on the top surface of the base machine 10. As an example, the indicator 65 is formed into a columnar shape that is long in the up-down direction D1. The lighting state of the indicator 65 changes according to an operation state of the work vehicle 1 (such as a traveling state and an execution state of the spreading work). As a result, the operation state of the work vehicle 1 can be visually recognized even from the surroundings of the work vehicle 1.

The sensor device 66 includes, for example, an inertial measurement unit (IMU) that detects a posture of the base machine 10. The inertial measurement unit includes an inertial sensor such as an angular velocity sensor or an acceleration sensor, and detects a posture (an inclination or the like) of the base machine 10 by being mounted on the base machine 10.

In addition, the sensor device 66 includes, for example, a remaining amount sensor that detects the remaining amount of the chemical solution that is a spread substance and the remaining amount of the fuel. As an example, the sensor device 66 detects the remaining amount of the chemical solution from the amount of the chemical solution in the tank 64. Similarly, the sensor device 66 detects the remaining amount of fuel from the amount of fuel in the fuel tank.

In addition, the wired device 81 and the wireless device 82 are the operation device 8 for operating the work vehicle 1, and thus basically adopt a common configuration. Specifically, as shown in Fig. 4, each of the wired device 81 and the wireless device 82 as the operation device 8 includes a first travel operation unit 801, a second travel operation unit 802, a switching operation unit 803, and an indicator lamp 804. In the present embodiment, as an example, as shown in Fig. 4, each of the first travel operation unit 801, the second travel operation unit 802, and the switching operation unit 803 includes various types of mechanical switches such as a lever switch, a slide switch, a joystick, a seesaw switch, or a push button switch. The operation device 8 includes a circuit board therein. Upon receiving an operation on the first travel operation unit 801, the second travel operation unit 802, or the switching operation unit 803 from the operator, the operation device 8 outputs an operation signal (electric signal) in accordance with the operation. For example, when the operator operates the first travel operation unit 801 upward, the operation device 8 outputs an operation signal indicating that the first travel operation unit 801 has been operated upward.

The following operations are assigned to the first travel operation unit 801, the second travel operation unit 802, and the switching operation unit 803. An operation for moving the base machine 10 forward and backward is assigned to the first travel operation unit 801 including a lever switch that can be operated in the vertical direction (up-down direction) as viewed from the operator. An operation for turning the base machine 10 to the left and to the right is assigned to the second travel operation unit 802 including a lever switch that can be operated in the horizontal direction (left-right direction) as viewed from the operator. An operation for enabling a manual travel mode for manually causing the travel unit 11 to travel is assigned to the switching operation unit 803 including a push button switch. The indicator lamp 804 is, for example, an LED and is turned on when the manual travel mode is enabled.

In the present embodiment, both the first travel operation unit 801 and the second travel operation unit 802 are lever type (stick type) operating tools. Therefore, for example, the first travel operation unit 801 can receive an operation of moving between a "neutral position" and a "forward position" or between the "neutral position" and a "backward position". Similarly, the second travel operation unit 802 can receive an operation of moving between the "neutral position" and a "right turn position" or between the "neutral position" and a "left turn position". Here, the "neutral position" is a neutral position, and in a state in which the operator does not touch the first travel operation unit 801 and the second travel operation unit 802, both the first travel operation unit 801 and the second travel operation unit 802 return to the "neutral position". The "forward position" of the first travel operation unit 801 is a movable limit position on the upper side as viewed from the operator, and the "backward position" is a movable limit position on the lower side as viewed from the operator. The "right turn position" of the second travel operation unit 802 is a movable limit position on the right side as viewed from the operator, and the "left turn position" is a movable limit position on the left side as viewed from the operator. Hence, for example, upon receiving, from the operator, an operation involving the movement of the first travel operation unit 801 from the "neutral position" toward the "forward position" (that is, the upper side), the operation device 8 outputs an operation signal in accordance with an amount of the operation (the amount of movement of the first travel operation unit 801).

The control device 7 mainly includes a computer system having one or more processors such as a central processing unit (CPU) and one or more memories such as read only memory (ROM) and random access memory (RAM), and executes various processes (information processing). In the present embodiment, the control device 7 is an integrated controller that controls the entire work vehicle 1, and includes, for example, an electronic control unit (ECU). However, the control device 7 may be provided separately from the integrated controller, or may mainly include one processor, or a plurality of processors.

As shown in Fig. 5, the control device 7 includes an acquisition processing unit 71, a travel processing unit 72, a spread processing unit 73, a discrimination processing unit 74, a recovery processing unit 75, a determination processing unit 76, a re-recovery processing unit 77, and a display processing unit 78. In the present embodiment, as an example, the control device 7 mainly includes the computer system having one or more processors. Therefore, the plurality of functional units (such as the acquisition processing unit 71) is achieved by the one or more processors executing a control program. The plurality of functional units included in the control device 7 may be provided in a plurality of housings in a distributed manner, or may be provided in one housing.

The control device 7 is configured in such a manner as to be communicable with a device provided in each part of the base machine 10. That is, at least the travel unit 11, the positioning device 2, the implement 400 (spreader 401 or the weeding machine 402), the communication device 60, the user interface 61, the obstacle detection device 62, the power source 63, the indicator 65, the connection unit 80, and the like are connected to the control device 7. As a result, the control device 7 can control the travel unit 11, the implement 400, and the like, and acquire electric signals from the positioning device 2, the communication device 60, the obstacle detection device 62, and the like. Furthermore, the control device 7 can also acquire an operation signal from the operation device 8 (wired device 81 and the wireless device 82) connected to the connection unit 80. The control device 7 may exchange various types of information (data) directly with each device, or indirectly via, for example, a repeater.

Specifically, the control device 7 can communicate with, for example, the client terminal 210 via the communication device 60. As a result, the control device 7 can display various types of information on the display unit 211 of the client terminal 210 and can receive operation information of the operation unit 212 of the client terminal 210. That is, the control device 7 has a function as a display control unit that causes at least the display unit 211 of the client terminal 210 to display a display screen.

In addition to the above functional units, the control device 7 further includes an engine control unit, and a hydro-static transmission (HST) control unit that performs control related to a hydrostatic continuously variable transmission. The engine control unit performs control related to the engine (power source 63). The HST control unit performs control related to the hydrostatic continuously variable transmission.

The acquisition processing unit 71 executes an acquisition process of acquiring an electric signal (including data) from each device. In the present embodiment, the acquisition processing unit 71 regularly or irregularly acquires the output of each sensor of the obstacle detection device 62, the posture of the base machine 10 from the sensor device 66, and information (data) such as the remaining amount of the chemical solution that is a spread substance and the remaining amount of the fuel. Furthermore, the acquisition processing unit 71 acquires operation signals from the operation device 8 (wired device 81 and the wireless device 82). As a result, the control device 7 can cause the acquisition processing unit 71 to acquire the operation signal corresponding to the operation on the operation device 8. The acquisition processing unit 71 may directly acquire various types of data from various sensors or the like, or may indirectly acquire various types of data via an electronic control unit or the like. The data acquired by the acquisition processing unit 71 is stored in, for example, a memory.

The travel processing unit 72 performs an automatic travel process of causing the base machine 10 to automatically travel along the target path of the agricultural land F1 on the basis of positioning information or the like acquired from the positioning device 2. Specifically, the travel processing unit 72 causes the travel unit 11 to automatically travel along the target path on the basis of positioning information including the position and the azimuth of the base machine 10 that are measured by the positioning device 2. For example, when the positioning information is in the RTK positioning enabled state and the operator operates (for example, long presses) the operation unit 212 of the client terminal 210, the client terminal 210 outputs a travel start instruction (work start instruction) to the work vehicle 1. When acquiring the travel start instruction from the client terminal 210, the travel processing unit 72 starts automatic travel of the work vehicle 1 on the basis of positioning information of the base machine 10 measured by the positioning device 2. As a result, the work vehicle 1 starts automatic travel along the target path and starts work with the implement 400.

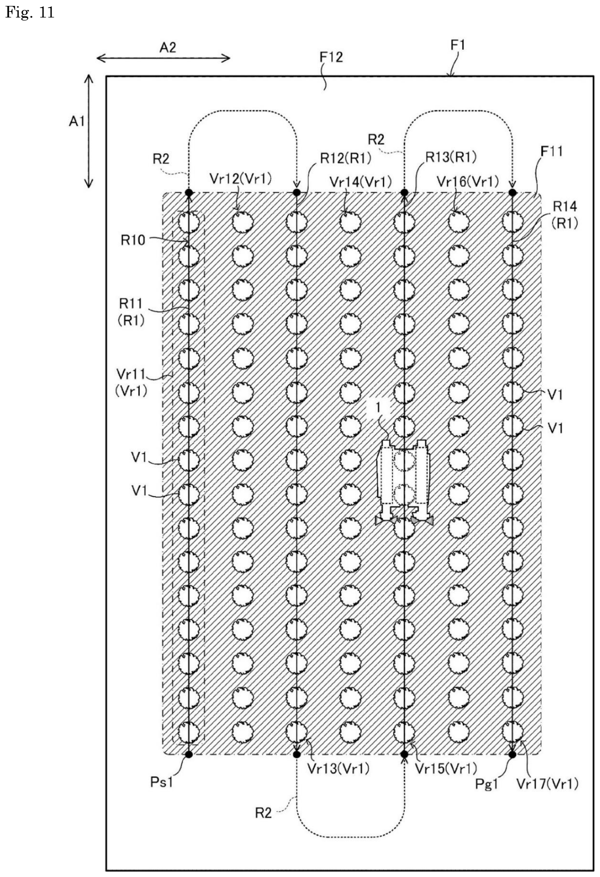

When the work vehicle 1 automatically travels along a target path R10 (see Fig. 11), the work vehicle 1 automatically travels on the travel path. In short, the travel processing unit 72 causes the work vehicle 1 to automatically travel on the travel path. The "travel path" referred to herein is a path through which the work vehicle 1 actually passes when the work vehicle 1 automatically travels in the agricultural land F1 (work site). That is, the travel trajectory of the work vehicle 1 when the work vehicle 1 automatically travels along the target path R10 is the "travel path". Here, the travel path may be common (identical) to the target path R10, or may be defined separately from the target path R10. As an example, when the work vehicle 1 automatically travels along the target path R10, in a case where the work vehicle 1 passes a position 50 cm offset rightward from the target path R10, a "travel path" is formed at the position 50 cm offset rightward from the target path R10. In the present embodiment, it is assumed that the travel path is common (identical) to the target path R10.

The target path R10 includes a plurality of work paths R1 (see Fig. 11), each of which is a linear path along which the work vehicle 1 performs work (spreading work) on the crop V1 that is a work target (spread target). In other words, the travel processing unit 72 causes the work vehicle 1 to automatically travel along the work path R1.

Furthermore, the travel processing unit 72 performs manual travel processing of controlling the travel unit 11 in accordance with operation signals from the operation device 8 (wired device 81 and the wireless device 82). That is, the travel unit 11 is controlled by the travel processing unit 72, and thus, the control device 7 can control the travel unit 11 in accordance with the operation of the operator on the operation device 8, in other words, can manually drive the travel unit 11.

The spread processing unit 73 performs spread control processing related to work (spreading work) of the spreader 401. Specifically, when the work vehicle 1 starts automatic travel at the work start position, the spread processing unit 73 outputs, to the spreader 401, a switching signal for switching the spread patterns on the basis of control information included in a predetermined target path. Upon receiving the switching signal, the spreader 401 executes the spreading work in a predetermined spread pattern.

The discrimination processing unit 74 discriminates whether a connected device connected to the connection unit 80 is the wired device 81 or the wireless device 82. A "connected device" in the present disclosure is a device connected to the connection unit 80 of the work vehicle 1, that is, a device connected to the work vehicle 1. In the present embodiment, as described above, since the wired device 81 or the wireless device 82 as the operation device 8 is selectively selected and connected to the connection unit 80, the connected device is the operation device 8 and is either the wired device 81 or the wireless device 82.

When entering the target path R10 from the entry position of the target path R10, the recovery processing unit 75 performs a recovery process of moving (traveling) the work vehicle 1 to the recovery position in a case where a deviation including at least one of a position deviation and an azimuth deviation of the work vehicle 1 with respect to the target path R10 exceeds a threshold. In the recovery process, the recovery processing unit 75 further moves (travels) the work vehicle 1 that has reached the recovery position from the recovery position to the entry position of the target path R10. The "recovery position" referred to in the present disclosure is a position where the deviation (at least one of the position deviation and the azimuth deviation) is reduced and entry from the entry position to the target path R10 can be started. That is, in a case where the deviation of the work vehicle 1 with respect to the target path R10 is large, the work vehicle 1 is moved to the recovery position through the recovery process, so that the work vehicle 1 can enter the target path R10 from the entry position with the deviation reduced.

In the recovery process, the recovery processing unit 75 sets the recovery advancing direction, which is an advancing direction of the work vehicle 1 until reaching the target position, according to at least the positional relationship between the actual position and the next target position. The "advancing direction" in the present disclosure is a direction in which the base machine 10 of the work vehicle 1 is caused to advance by the travel unit 11, and includes forward movement and backward movement. That is, the recovery processing unit 75 selects and sets the recovery advancing direction from "forward movement" and "backward movement" in the recovery process.

The determination processing unit 76 performs a determination process of determining whether or not the work vehicle 1 protrudes from the agricultural land F1 (work site) when the work vehicle 1 is moved to the recovery position. That is, since the work vehicle 1 may protrude from the outer peripheral edge (outer shape) of the agricultural land F1 in the middle of the recovery process of moving the work vehicle 1 to the recovery position, the determination processing unit 76 determines the presence or absence of the protrusion. The determination processing unit 76 performs the determination on the basis of information such as at least the outer peripheral edge of the agricultural land F1 registered in advance, the travel path of the work vehicle 1 to the recovery position in the recovery process, and the size of the work vehicle 1.

The re-recovery processing unit 77 performs a re-recovery process. The re-recovery process is a process of moving (traveling) the work vehicle 1 toward the recovery position in a case where the actual position of the work vehicle 1 deviates from the recovery position after the recovery process and before the start of traveling toward the entry position of the target path R10. That is, when the work vehicle 1 is moved toward the recovery position through the recovery process, for example, slip or the like occurs in the work vehicle 1 due to the influence of an inclined surface, a muddy surface, a step (including a depression), or the like of the agricultural land F1, and the work vehicle 1 may not reach the recovery position as intended. In such a case, since the actual position of the work vehicle 1 deviates from the recovery position, the re-recovery process is performed, and the work vehicle 1 can be moved to the recovery position again.

The display processing unit 78 displays various types of information on, for example, the display unit 211 of the client terminal 210 or the display unit 611 of the user interface 61. The display processing unit 78 displays, on the display unit 211 (or the display unit 611), an operation screen for generating the target path R10, the generated target path R10, information regarding automatic travel (a traveling situation, a work situation, and the like of the work vehicle 1), and the like.

### Specific configuration of spreader

Next, a specific configuration of the spreader 401 mounted on the base machine 10 as the work implement 400 will be described.

The spreader 401 performs spreading work of spreading a chemical solution that is a spread substance onto the crop V1 that is a spread target. As shown in Fig. 10 and other figures, the spreader 401 includes a nozzle unit 4 and an airflow generating unit 5. The nozzle unit 4 includes a spread nozzle 41 and the like, and discharges the chemical solution as a spread substance stored in the tank 64. The airflow generating unit 5 generates an airflow that conveys the spread substance (chemical solution) discharged from the nozzle unit 4.

The nozzle unit 4 and the airflow generating unit 5 are supported by the support frame 3. Since the support frame 3 is supported by the base machine 10, the spreader 401 including the nozzle unit 4 and the airflow generating unit 5 is indirectly supported by the base machine 10. In the present embodiment, since the support frame 3 is disposed at the rear end of the base machine 10, the nozzle unit 4 and the airflow generating unit 5 supported by the support frame 3 are also disposed at the rear end of the base machine 10.

The spread nozzle 41 of the nozzle unit 4 is supported by the support frame 3, and is a part that discharges (spreads) a spread substance. In the present embodiment, as an example, each of the spread nozzles 41 is a discharge port (spread portion) that actually serves as an outlet for the spread substance (chemical solution). The spreader 401 includes a plurality of (for example, 12 in the present embodiment) the spread nozzles 41.

In addition to the spread nozzle 41, the nozzle unit 4 includes a spread pipe 42, a pump 43 (see Fig. 7), a valve 44 (see Fig. 7), and a spread piping. In the present embodiment, the spread nozzles 41 are attached to the spread pipes 42. The spread pipes 42 are connected by the spread piping to the pump 43 via the valves 44. The pump 43 pumps, to the spread pipes 42, the spread substance (chemical solution) stored in the tank 64. The valves 44 are electronically controlled valve units such as solenoid valves, and change, for example, a pressure (spray pressure) and a spread pattern for spreading the spread substance. Consequently, the chemical solution in the tank 64 is supplied by the pump 43 to the spread nozzles 41 through the valves 44 and the spread pipes 42, and is discharged from the spread nozzles 41. Here, the atomized chemical solution is discharged (sprayed) from the spread nozzles 41.

More specifically, as shown in Figs. 9 and 10, the spread pipes 42 are piping that are long in the up-down direction D1, and two spread pipes 42 are attached to each of the vertical frame 3L and the vertical frame 3R of the support frame 3. That is, in the present embodiment, the nozzle unit 4 includes a total of four spread pipes 42. The two (pair of) spread pipes 42 attached to each of the vertical frame 3L and the vertical frame 3R are aligned in the left-right direction D2. Each of the spread pipes 42 allows the chemical solution as the spread substance injected from an upper end thereof to flow down the pipe and discharges the chemical solution from three spread nozzles 41. Three spread nozzles 41 are attached to each spread pipe 42, so that the nozzle unit 4 has a total of 12 spread nozzles 41.

Each of the spread nozzles 41 is attached to its corresponding spread pipe 42 in such a manner that the position can be changed in the up-down direction D1. Consequently, each of the spread nozzles 41 can change spacing between the adjacent spread nozzles 41 and a height position relative to the corresponding spread pipe 42 according to the spread target (crop V1). Moreover, each of the spread nozzles 41 is attached in such a manner that the position and orientation (angle) thereof in the up-down direction D1 and the left-right direction D2 relative to the base machine 10 can be changed according to the spread target. However, in the spreader 401, for example, the number of the spread nozzles 41 provided to each of the spread pipes 42 can be changed as appropriate according to, for example, the kind of the spread target (crop V1), or the length of each of the spread pipes 42.

The airflow generating unit 5 generates an airflow that conveys the spread substance (chemical solution) discharged from the spread nozzle 41. The airflow generating unit 5 is supported by the support frame 3 together with the spread nozzles 41. That is, in the present embodiment, the spreader 401 is an air-assist type spreader that spreads a spread substance (chemical solution) by using the airflow generated by the airflow generating unit 5. As a result, the work vehicle 1 can efficiently spread the spread substance (chemical solution) onto the spread target (crop V1) at a position relatively distant from the spread nozzles 41.

The airflow generating unit 5 includes ducts 51 and a blower 52. Each of the ducts 51 forms a flow path through which air flows in the up-down direction D1. The blower 52 causes air to flow into the ducts 51. In the airflow generating unit 5, the air blown out from a blow-out hole 511 (see Fig. 10) formed in the duct 51 forms an airflow. In short, the airflow generating unit 5 blows the air that is sent to the ducts 51 by the blower 52, along the flow paths in the ducts 51, and then out through the blow-out holes 511, thereby generating flows of air (airflows) flowing outward through the blow-out holes 511. According to this configuration, stable airflows can be generated over a relatively wide area. Further, the airflow generating unit 5 can adjust the airflow volume of the airflow by controlling the blower 52. The airflow generating unit 5 can adjust the conveyance distance of the spread substance by adjusting the volume of air, and can convey the spread substance farther as the volume of air increases. Therefore, in the work vehicle 1 according to the present embodiment, it is possible to adjust the spreading range of the spread substance that is spread by the spreader 401.

More specifically, the ducts 51 are piping that is long in the up-down direction D1, and one duct 51 is attached to each of the vertical frame 3L and the vertical frame 3R of the support frame 3. That is, in the present embodiment, the airflow generating unit 5 includes a total of two ducts 51. Each of the ducts 51 includes a left side surface and a right side surface, in each of which a plurality of the blow-out holes 511 is formed in a line in the up-down direction D1. Two spread pipes 42 of the nozzle unit 4 are fixed to the rear side of each duct 51.

Here, each of the ducts 51, the two spread pipes 42 attached to each of the ducts 51, and the total of six spread nozzles 41 attached to the two spread pipes 42 of each of the ducts 51 are disposed symmetrically in the left-right direction D2. Of the two spread pipes 42 of each of the ducts 51, three spread nozzles 41 provided to the left spread pipe 42 discharge the spread substance (chemical solution) toward the left front, and three spread nozzles 41 provided to the right spread pipe 42 discharge the spread substance (chemical solution) toward the right front. Hence, the atomized spread substance discharged from the left spread nozzles 41 is conveyed leftward, borne in the airflow blown leftward from each of the ducts 51, and the atomized spread substance discharged from the right spread nozzles 41 is conveyed rightward, borne in the airflow blown rightward from each of the ducts 51.

Hence, among the plurality of (12) spread nozzles 41, three spread nozzles 41 provided to the leftmost spread pipe 42 spread the chemical solution leftward onto the crops V1 located outward of and to the left of the base machine 10. Among the plurality of spread nozzles 41, three spread nozzles 41 provided to the inner left spread pipe 42 adjacent to the leftmost spread pipe 42 spread the chemical solution rightward onto the crops V1 located in the space Sp1 inside the base machine 10. Among the plurality of spread nozzles 41, three spread nozzles 41 provided to the rightmost spread pipe 42 spread the chemical solution rightward onto the crops V1 located outward of and to the right of the base machine 10. Among the plurality of spread nozzles 41, three spread nozzles 41 provided to the inner right spread pipe 42 adjacent to the rightmost spread pipe 42 spread the chemical solution leftward onto the crops V1 located in the space Sp1 inside the base machine 10.

With the above configuration, in the spreader 401, the two spread pipes 42 and the six spread nozzles 41, which are provided to the vertical frame 3L of the support frame 3, function as a left spreading unit. Moreover, the two spread pipes 42 and the six spread nozzles 41, which are provided to the vertical frame 3R of the support frame 3, function as a right spreading unit. The pair of left and right spreading units is disposed behind the base machine 10, spaced apart to allow the crops V1 to pass through a space (space Sp1) therebetween in such a manner as to be able to spread the chemical solution in the left-right direction D2.

Moreover, the spreader 401 is configured in such a manner that the plurality of (12) spread nozzles 41 is divided into a plurality of systems and can be controlled on a system-by-system basis. In the present embodiment, as an example, six spread nozzles 41 provided to two spread pipes 42 that are on the inner side in the left-right direction D2, of the four spread pipes 42, are classified as a first system, the three spread nozzles 41 provided to the leftmost spread pipe 42 are classified as a second system, and the three spread nozzles 41 provided to the rightmost spread pipe 42 are classified as a third system. Hence, the spread patterns of the spreader 401 include a full spread pattern in which the spread substance (chemical solution) is spread from all the spread nozzles 41, and a restricted spread pattern in which the spread direction is restricted. The restricted spread pattern includes a first spread pattern in which only the six spread nozzles 41 of the first system perform spreading, a second spread pattern in which only the three spread nozzles 41 of the second system perform spreading, and a third spread pattern in which only the three spread nozzles 41 of the third system perform spreading. Furthermore, the restricted spread pattern includes a fourth spread pattern in which only nine spread nozzles 41 of the first and second systems perform spreading, a fifth spread pattern in which only nine spread nozzles 41 of the first and third systems perform spreading, and a sixth spread pattern in which only six spread nozzles 41 of the second and third systems perform spreading.

The spreader 401 is controlled by the control device 7, and the above-mentioned plurality of spread patterns (a total of seven patterns including the full spread pattern and the six restricted spread patterns) is switched as appropriate. At least the valves 44 of the nozzle unit 4 are provided according to the systems of the plurality of spread nozzles 41. In the present embodiment, three valves 44 are provided for the three systems (first system, the second system, and the third system), respectively. The plurality of (here, three) valves 44 is individually controlled by the control device 7 to change the spread pattern. Moreover, the spreader 401 can change the spreading range of the spread substance also by changing the pressure (spray pressure) for spreading the spread substance on a system-by-system basis. Furthermore, in the present embodiment, the spreading range of the spread substance can be adjusted also by adjusting the volume of air of the airflow generating unit 5. Therefore, more various spreading ranges can be achieved according to the spread target (crop V1) or the spread substance (chemical solution).

In the present embodiment, as described above, the support frame 3 is not relatively fixed to the base machine 10, but is configured in such a manner as to be rotatable about the rotation axis Ax1. When the support frame 3 rotates, the spreader 401 supported by the support frame 3 also rotates about the rotation axis Ax1.

Moreover, the work vehicle 1 according to the present embodiment does not include an actuator that actively rotates the support frame 3. Hence, the support frame 3 rotates only after an external force acts on the support frame 3. For example, when the base machine 10 travels on a horizontally inclined surface, the support frame 3 rotates under the weight of the support frame 3, that is, gravity acting on the support frame 3. Here, if the support frame 3 and the members (the spreader 401 and the like) supported by the support frame 3 have a weight balance symmetrical in the left-right direction D2, the support frame 3 is maintained at the neutral position as long as the base machine 10 is kept horizontal.

According to the rotatable support frame 3 described above, for example, while the base machine 10 is traveling on a horizontally inclined surface, the support frame 3 rotates, which hardly causes the occurrence of unevenness in the amount of the spread substance (chemical solution) spread by the spreader 401 (uneven spreading). In short, if the support frame 3 is fixedly supported by the base machine 10, the base machine 10 may tilt when traveling on a horizontally inclined surface. In this case, a distance from the spread nozzle 41 is different between the upper part and the lower part of the crop V1 (spread target) extending straight in the vertical direction from the ground (agricultural land F1), and the amount of the spread substance spread may be uneven. On the other hand, when the support frame 3 rotates, the work vehicle 1 according to the present embodiment can maintain, for example, the support frame 3 and the spread nozzles 41 supported by the support frame 3 in the same postures as when traveling on a horizontal plane. Hence, the distance from the spread nozzle 41 is less likely to vary between the upper part and the lower part of the plant of the crop V1 (spread target) extending straight in the vertical direction from the ground (agricultural land F1), which facilitates preventing the occurrence of unevenness in the spread amount of the spread substance.

### [3] Control method for work vehicle

Hereinafter, with reference to Figs. 11 to 22, a control method for the work vehicle 1 (hereinafter, simply referred to as a "control method") mainly executed by the control device 7 will be described.

Since the work vehicle 1 is an example of a work machine, this control method is an example of a "control method for a work machine". Among these control methods, a control method particularly related to automatic travel of the work vehicle 1 is also referred to as a "travel control method for the work vehicle 1". That is, the control method according to the present embodiment includes a travel control method for the work vehicle 1.

Since the control method according to the present embodiment is executed by the control device 7 mainly including a computer system, in other words, the control method is embodied by a work vehicle control program (hereinafter, simply referred to as a "control program"). That is, the control program according to the present embodiment is a computer program for causing one or more processors to execute each process related to the control method. Such a control program may be cooperatively executed by, for example, the control device 7 and the client terminal 210. Among the control programs, a program that causes one or more processors to execute each process related to the travel control method for the work vehicle 1 will also be referred to as a "travel control program".

The control device 7 executing the control method configures a control system 100 as shown in Fig. 5. The control system 100 is a system that executes control related to traveling of the work vehicle 1. In other words, the control system 100 according to the present embodiment is used for controlling the work vehicle 1 that performs work while being moved in the agricultural land F1 (work site) in which a plurality of crop rows Vr1 (work target rows) including the plurality of crops V1 (work targets) is arranged. Furthermore, a part of the control system 100 that executes control (travel control) related to travel of the work vehicle 1 is an example of a "travel control system".

As described above, the control system 100 according to the present embodiment includes the control device 7 including the acquisition processing unit 71, the travel processing unit 72, the spread processing unit 73, the discrimination processing unit 74, the recovery processing unit 75, the determination processing unit 76, the re-recovery processing unit 77, the display processing unit 78, and the like. The control device 7 is mounted on the base machine 10 of the work vehicle 1 and is a part of the constituents of the work vehicle 1. Therefore, the control system 100 configures the work vehicle 1 together with the base machine 10 including the travel unit 11. In other words, the work vehicle 1 according to the present embodiment includes the control system 100 (travel control system) and the base machine 10. The base machine 10 is controlled by the control system 100.

### Basic operation

First, a basic operation when the work vehicle 1 automatically travels in the agricultural land F1 as a work site by the travel processing unit 72 executing the automatic travel process will be described. Here, it is assumed that the spreader 401 is attached as the implement 400 to the base machine 10 of the work vehicle 1, and the spreading work is performed by the work vehicle 1.

The travel processing unit 72 starts automatic travel of the work vehicle 1 when the acquisition processing unit 71 acquires an automatic travel start instruction in a state in which predetermined automatic travel conditions are satisfied. The automatic travel conditions include, for example, that the target path R10 is set, that a key switch (engine key switch) for starting an engine (power source 63) of the work vehicle 1 is in an ON state, and that the work vehicle 1 is located at the work start position Ps1 (see Fig. 11). That is, when the work vehicle 1 is moved to the work start position Ps1 on the target path R10 through manual operation of the operation device 8 in a state in which the target path R10 is set and the engine is operated, the automatic travel conditions are satisfied. In this state, for example, when the operator operates the operation unit 212 of the client terminal 210 and an automatic travel start instruction is output from the client terminal 210 to the work vehicle 1, the travel processing unit 72 starts automatic travel of the work vehicle 1.

Here, as an example, as shown in Fig. 11, the agricultural land F1 in which seven crop rows Vr11 to Vr17 exist is assumed as a work site. The agricultural land F1 includes a work region F11 (shaded region in Fig. 11) in which the crop rows Vr11 to Vr17 are formed, and a non-work region F12 as a headland region formed around the work region F11 in such a manner as to surround the work region F11. The work region F11 is a region in the agricultural land F1 where work (here, spreading work) is performed by the work vehicle 1. The non-work region F12 is a region where work (here, spreading work) is not performed by the work vehicle 1. That is, the work site (agricultural land F1) includes the work region F11 in which the work vehicle 1 performs work and the non-work region F12 in which the work vehicle 1 does not perform work.

The work vehicle 1 can automatically travel (autonomously travel) in the agricultural land F1 along the preset target path R10. For example, the work vehicle 1 automatically travels along the target path R10 including a plurality of work paths R1 and a plurality of movement paths R2 from the work start position Ps1 to the work end position Pg1. Each of the plurality of work paths R1 is a linear path on which the work vehicle 1 performs work (spreading work) on the crop V1 that is a work target (spread target), and each of the plurality of movement paths R2 is a path (non-work path) on which the work vehicle 1 is moved between the crop rows Vr1 without performing the spreading work, and may include a turning path and a straight path.

In the example in Fig. 11, the target path R10 includes four work paths R11 to R14 formed in the vertical direction A1 which is the longitudinal direction of the crop row Vr1 (that is, the direction in which the plurality of crops V1 are arranged) in the work region F11. Here, as an example, the work path R11 is set on the crop row Vr11, the work path R12 is set on the crop row Vr13, the work path R13 is set on the crop row Vr15, and the work path R14 is set on the crop row Vr17. The movement path R2 is formed in such a manner as to connect the work paths R11 to R14 adjacent in the width direction A2 in the non-work region F12 located on both sides in the vertical direction A1 when viewed from the work region F11. That is, basically, in the target path R10, the work path R1 is formed in the work region F11 in the work site (agricultural land F1), and the movement path R2 is formed in the non-work region F12.

According to the target path R10, the work vehicle 1 travels in the work region F11 from the work start position Ps1 toward one side (upper side in Fig. 11) in the vertical direction A1 along the work path R11, and then travels in the non-work region F12 toward the starting end of the next work path R12 along the movement path R2. The work vehicle 1 travels in the work region F11 toward the other side (lower side in Fig. 11) in the vertical direction A1 along the work path R12, and then travels in the non-work region F12 toward the starting end of the next work path R13 along the movement path R2. The work vehicle 1 travels in the work region F11 toward one side in the vertical direction A1 along the work path R13, and then travels in the non-work region F12 toward the starting end of the next work path R14 along the movement path R2. Finally, the work vehicle 1 travels in the work region F11 to the work end position Pg1 toward the other side in the vertical direction A1 along the work path R14.

Here, it is assumed that the current position of the work vehicle 1 is specified by the position of the antenna 21 disposed at the center in the left-right direction D2 in the rear portion of the base machine 10 in plan view. Therefore, when the work vehicle 1 automatically travels along the target path R10, the center of the rear portion of the base machine 10 in the left-right direction D2 passes on the target path R10. As a result, the travel path on which the work vehicle 1 actually automatically travels coincides with the target path R10. Further, as described above, while the work vehicle 1 travels in the posture of standing astride one crop row Vr1 by the gate-shaped base machine 10, the spreader 401 spreads the spread substance (chemical solution) to the crops V1 of the crop row Vr1 and the crops V1 of the crop row Vr1 adjacent to the crop row Vr1. The current position of the work vehicle 1 may be specified from the position of the antenna 22 disposed at the front portion of the base machine 10, or may be specified from the positions of both the antennas 21 and 22.

Therefore, for example, as shown in Fig. 11, while the work vehicle 1 is traveling on the work path R13 set on the crop row Vr15, the base machine 10 travels astride the crop row Vr15. In this case, the first block 10L travels on the work path between the crop row Vr14 and the crop row Vr15, and the second block 10R travels on the work path between the crop row Vr15 and the crop row Vr16. Furthermore, in this case, the work vehicle 1 can simultaneously spread the spread substance (chemical solution) to the crops V1 of the crop row Vr15, the crops V1 of the crop row Vr14 located on the left side, and the crops V1 of the crop row Vr16 located on the right side.

In addition, the work vehicle 1 automatically travels in a predetermined row order. In the example in Fig. 11, the work path R1 is set in every other row in the arrangement order of the crop rows Vr1, such as the crop rows Vr11, Vr13, Vr15, and Vr17. Therefore, the work vehicle 1 automatically travels on the plurality of crop rows Vr1 every other row. The work vehicle 1 can perform the spreading work on all the spread targets by simultaneously spreading the spread substance (chemical solution) to the spread targets (crops V1) in three rows adjacent in the width direction A2 while traveling on the plurality of crop rows Vr1 every other row. However, such setting of the work path R1 is merely an example, and the work vehicle 1 may travel for each row in the arrangement order of the crop rows Vr1, or may travel for every two or more rows.

Here, the work vehicle 1 performs the spreading work while traveling on the work path R1, and does not perform the spreading work while traveling on the movement path R2. Therefore, the work vehicle 1 starts the spreading work when starting traveling on the work path R1, and stops the spreading work when traveling on the work path R1 to the end. The work vehicle 1 travels on the movement path R2 while stopping the spreading work, and resumes the spreading work when reaching the starting end of the next work path R1. As a result, the work vehicle 1 performs the spreading work while traveling in the work region F11, and does not perform the spreading work while traveling in the non-work region F12.

In the example in Fig. 11, the movement path R2 includes a turning path for right turn or left turn in slow turn. However, the turning mode for changing the azimuth of the work vehicle 1 is not limited to "slow turn", and may include, for example, "pivot-turn" and "spin-turn". Furthermore, the turning mode of the work vehicle 1 may include a turning mode in which the base machine 10 is turned while switching between forward movement and backward movement in order to turn the base machine 10 within a limited space, such as a so-called "fishtail turn".

In addition, the target path R10 is generated on the basis of, for example, information such as work vehicle information regarding the work vehicle 1, agricultural land information regarding the agricultural land F1, and work information regarding work (here, spreading work). The work vehicle information includes information such as a model of the work vehicle 1, a position of the antenna 21 of the work vehicle 1, the type of the implement 400 (the spreader 401 in this case), a size and a shape of the implement 400, a position of the implement 400 with respect to the base machine 10, and a vehicle speed and an engine speed of the base machine 10 during work. The agricultural land information includes information such as the position and the shape of the agricultural land F1, the work start position Ps1, the work end position Pg1, and the work direction. Here, the work direction is a direction in which the work vehicle 1 travels while performing the spreading work in the work region F11 which is a region obtained by removing the non-work region F12 such as the headland from the agricultural land F1. The work information includes information such as the number of skips, which is the number of work paths R1 to be skipped when the work vehicle 1 is turned in the non-work region F12, and the width of the non-work region F12.

The work vehicle information, the agricultural land information, the work information, and the like may be manually set, for example, by the operator performing an operation of registering the information on the client terminal 210. Alternatively, for example, the information such as the position and the shape of the agricultural land F1 may be automatically acquired by the operator manually operating the work vehicle 1 to cause the work vehicle 1 to circle around once along the outer periphery of the agricultural land F1 and recording the transition of the position information of the antenna 21 at that time.

The generated target path R10 is stored in a memory (storage unit) of a control device of the work vehicle 1 and used for automatic travel using the travel processing unit 72. The target path R10 can also be displayed on the display unit 211 or the like of the client terminal 210.

### Related to manual travel

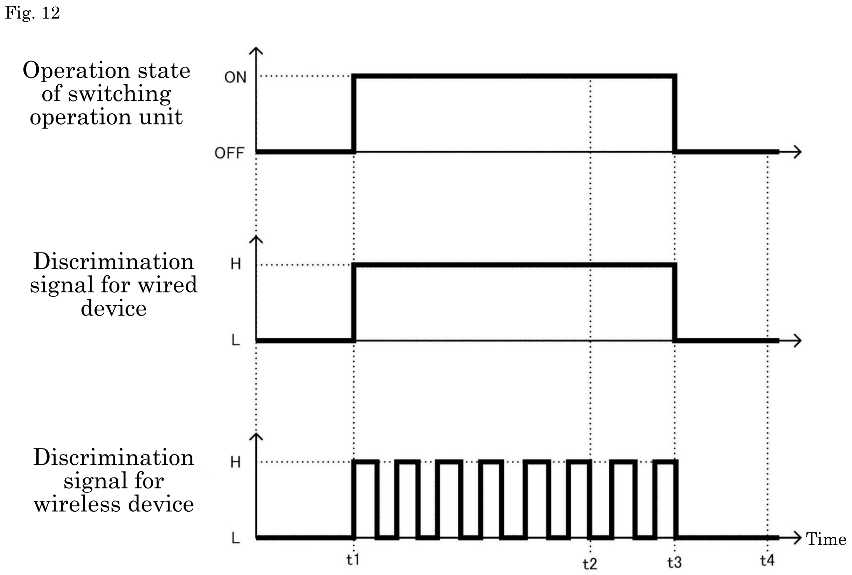

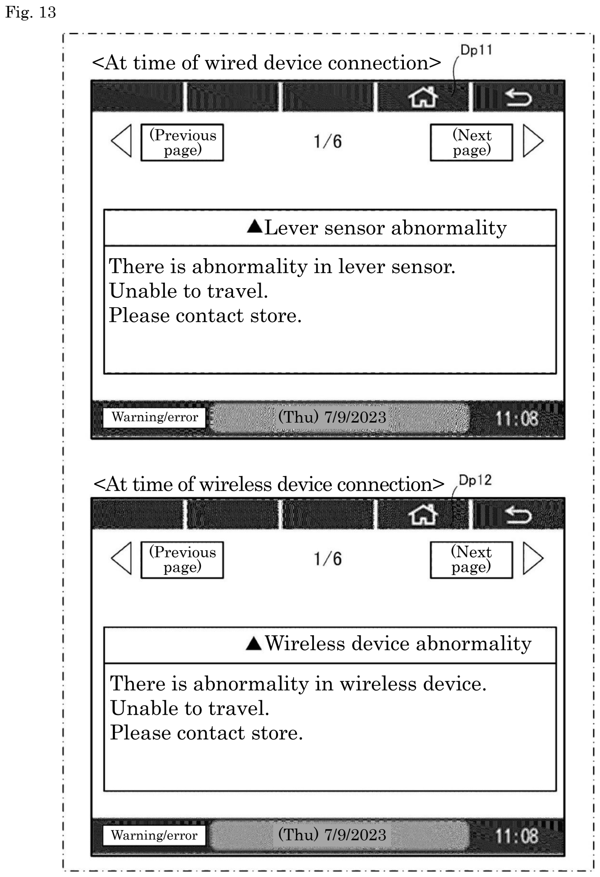

Next, a control method related to manual travel in which the travel processing unit 72 causes the work vehicle 1 to travel in accordance with the operation of the operation device 8 by the operator will be described with reference to Figs. 12 and 13.

That is, the control method according to the present embodiment includes a process for interrupting (stopping) the automatic travel process of the work vehicle 1 and causing the work vehicle 1 to manually travel according to the operation of the operation device 8. As an example, in a case where the remaining amount of the chemical solution as the spread substance falls below the threshold, or in a case where the remaining amount of the fuel falls below the threshold, it is necessary for the operator to stop the automatic travel process and supply the spread substance (chemical solution) or the fuel. In addition, when loading and unloading the work vehicle 1 onto and from a haul vehicle, the operator needs to manually operate the work vehicle 1 at a safe place outside the base machine 10. Therefore, in a case where the operator needs to manually operate the work vehicle 1 as described above, the automatic travel process of the work vehicle 1 is interrupted (stopped), and "manual travel" in which the operator manually operates and moves the work vehicle 1 to, for example, a replenishment position set around the agricultural land F1 is enabled.

When manual travel is performed, the travel processing unit 72 executes a manual travel process of controlling the travel unit 11 in accordance with an operation signal from the operation device 8 acquired by the acquisition processing unit 71. In the control method according to the present embodiment, as an example, manual travel is started when the switching operation unit 803 of the operation device 8 is pressed (long pressed) for a certain period of time or longer. That is, when the switching operation unit 803 for enabling the manual travel mode is pressed for a long time, the manual travel is started.

Incidentally, in the present embodiment, as described above, the operation device 8 used for manual travel is the wired device 81 or the wireless device 82 connected to the connection unit 80. That is, by making two types of devices, the wired device 81 and the wireless device 82, connectable to the work vehicle 1 using the single connection unit 80, either the wired device 81 or the wireless device 82 can be used as the operation device 8.

That is, the work vehicle 1 (work machine) according to the present embodiment is the work vehicle 1 (work machine) that performs work in the agricultural land F1 (work site), and includes the control device 7 and the connection unit 80. The control device 7 controls the work vehicle 1 (work machine) by using an operation signal from the operation device 8 including the wired device 81 or the wireless device 82. The connection unit 80 is a device for wired connection of the wired device 81. The connection unit 80 is configured to enable wired connection of the adapter 83 for receiving an operation signal transmitted from the wireless device 82 when the wireless device 82 is operated. As described above, by using the adapter 83, the connection unit 80 for connecting the wired device 81 can also be used for connecting the wireless device 82. Therefore, either of the wired device 81 and the wireless device 82 can be used as the operation device 8 by using the single connection unit 80.

Here, for example, the appropriate setting may be different depending on whether a device connected to the work vehicle 1 is the wired device 81 or the wireless device 82. As an example, in the case of the operation device 8, for example, a calibration value (a value of a "neutral position" or the like) for suppressing variation in control of the travel unit 11 with respect to operations of the first travel operation unit 801, the second travel operation unit 802, and the like may be different between the wired device 81 and the wireless device 82. Therefore, it is conceivable that a user (operator) performs appropriate setting according to a device connected to the work vehicle 1, but this takes time and effort on the part of the user. Therefore, in the control method according to the present embodiment, by adopting the configuration described below, a work machine control method, a work machine (work vehicle 1) control program, the work machine control system 100, and a work machine (work vehicle 1) that can easily reduce user's time and effort are realized.

That is, the control method according to the present embodiment is a control method for the work vehicle 1 (work machine) including the connection unit 80 and performing work in the agricultural land F1 (work site). The connection unit 80 can connect the wired device 81 by wire, and can connect the wireless device 82 via the adapter 83 instead of the wired device 81. This control method includes discriminating whether a connected device connected to the connection unit 80 is the wired device 81 or the wireless device 82.

That is, the discrimination processing unit 74 of the control device 7 automatically discriminates whether a connected device (the operation device 8 in the present embodiment) connected to the connection unit 80 is the wired device 81 or the wireless device 82. Therefore, the user (operator) does not need to set whether the connected device is the wired device 81 or the wireless device 82 by simply connecting one of the wired device 81 and the wireless device 82 to the connection unit 80, and it is easy to reduce the user's time and effort.

In the present embodiment, the wired device 81 and the wireless device 82 are the operation device 8 for operating the work vehicle 1 (work machine). Therefore, it is possible to use, as the operation device 8, one of the wired device 81 and the wireless device 82 that allows the operator to easily operate the work vehicle 1, for example, by using the single connection unit 80. As a result, operability of the work vehicle 1 is improved.

The connected device is discriminated on the basis of a discrimination signal input to the connection unit 80 at the time of operating the wired device 81 or the wireless device 82. That is, the discrimination processing unit 74 discriminates the connected device on the basis of the discrimination signal input to the connection unit 80 according to an operation on the wired device 81 or the wireless device 82 as the operation device 8. The discrimination signal is a signal derived from the operation signal, and may be the operation signal itself or a signal included in the operation signal. As a result, it is possible to discriminate a connected device by using a function (a function of outputting a signal according to an operation) of the wired device 81 or the wireless device 82 as the operation device 8.

Specifically, as shown in Fig. 12, it is assumed that the wired device 81 and the wireless device 82 have different discrimination signals input to the connection unit 80 when the switching operation unit 803 is operated. Fig. 12 shows an example of an operation state of the switching operation unit 803, a discrimination signal of (in the case of) the wired device 81, and a discrimination signal of (in the case of) the wireless device 82. Here, it is assumed that the operator presses switching operation unit 803 for a long time in order to start manual travel.

The switching operation unit 803 is pressed from time point t1 to time point t3. In this case, when a connected device connected to the connection unit 80 is the wired device 81 as the operation device 8, a discrimination signal (operation signal) continuously going to a high (H) level from time point t1 to time point t3 is input to the connection unit 80. On the other hand, when the connected device connected to the connection unit 80 is the wireless device 82 as the operation device 8, a discrimination signal (operation signal) that repeats the H level and the low (L) level at a predetermined cycle from time point t1 to time point t3 is input to the connection unit 80.

At time point t2 at which a certain period of time has elapsed since the start of the operation of the switching operation unit 803 (time point t1), the manual travel mode is enabled and manual travel is enabled. The discrimination processing unit 74 discriminates whether the connected device is the wired device 81 or the wireless device 82 on the basis of the discrimination signal (operation signal) acquired by the acquisition processing unit 71 from time point t1 to time point t2.

That is, as shown in Fig. 12, if the discrimination signal input from time point t1 to time point t2 is continuously an H level signal, the discrimination processing unit 74 discriminates that the connected device is the wired device 81. On the other hand, if the discrimination signal input from time point t1 to time point t2 is a signal that repeats the H level/L level at a predetermined cycle, the discrimination processing unit 74 discriminates that the connected device is the wired device 81. At time point t4 at which a predetermined time has elapsed from time point t3, the control device 7 recognizes that the switching operation unit 803 is not operated (OFF) on the basis of the fact that the discrimination signal input from time point t1 to time point t2 is continuously an L level signal.

Here, the discrimination signal is generated by the adapter 83 at the time of operating the wireless device 82. That is, the adapter 83 that has received the operation signal generated by the long press of the switching operation unit 803 in the wireless device 82 generates the discrimination signal that repeats the H level/L level at a predetermined cycle and outputs the discrimination signal to the connection unit 80 as shown in Fig. 12. As a result, the operator does not distinguish the operation content depending on whether the operation device 8 is the wired device 81 or the wireless device 82, and the adapter 83 automatically generates the discrimination signal for discriminating the wired device 81/the wireless device 82.

Furthermore, the discrimination signal generated by the adapter 83 is preferably a signal that cannot be reproduced through an operation on the wired device 81 by a person (operator). For example, in the case of the discrimination signal that repeats the H level/L level at a predetermined cycle as shown in Fig. 12, it is preferable to set the predetermined cycle to about 40 ms so that the discrimination signal is not generated regardless of how a person (operator) operates the switching operation unit 803 of the wired device 81. As a result, it is possible to suppress erroneous discrimination of the wired device 81/wireless device 82 due to the operation of the operator. With respect to an operation unit (here, the switching operation unit 803) for the operation for generating the discrimination signal, for example, a restriction is provided in terms of a structure such as a button that is less likely to be continuously hit by limiting a rebound speed at the time of operation, so that the discrimination signal generated by the adapter 83 may be a signal that cannot be reproduced by the operation on the wired device 81 by a person (operator).

In addition, the operation on the operation device 8 for generating the discrimination signal includes a start operation for starting use of the operation device 8. In the present embodiment, when the switching operation unit 803 of the operation device 8 is pressed (long pressed) for a certain period of time or more, manual travel using the operation device 8 is started. Therefore, the long pressing operation on the switching operation unit 803 is an example of the "start operation". As described above, since the discrimination signal for discriminating the wired device 81/wireless device 82 is generated through the start operation, it is possible to discriminate the wired device 81/wireless device 82 without forcing the operator to perform a special operation.

In addition, in the control method according to the present embodiment, the discrimination result for the connected device is maintained until a cancelation condition is satisfied. That is, once the discrimination processing unit 74 discriminates whether the connected device is the wired device 81 or the wireless device 82 on the basis of the discrimination signal, the discrimination result is maintained, and the discrimination result is not reversed until the cancelation condition is satisfied. As a result, once the connected device is discriminated, it is possible to prevent the discrimination result of the wired device 81/wireless device 82 from being erroneously overridden due to, for example, an error of the connected device or an operation error of the operator.

As an example, the cancelation condition includes that the work vehicle 1 (work machine) is restarted. In the present embodiment, the discrimination processing unit 74 discriminates the connected device at the time of the first start operation of the operation device 8 after the start (power on) of the work vehicle 1. Therefore, once it is determined whether the connected device is the wired device 81 or the wireless device 82, the discrimination result for the connected device is not changed at least until the power supply of the work vehicle 1 is turned off. As a result, once the connected device is discriminated, it is possible to prevent the discrimination result of the wired device 81/wireless device 82 from being erroneously overridden due to, for example, an error of the connected device or an operation error of the operator at least until the work vehicle 1 is restarted.

In the present embodiment, the discrimination result for the connected device includes "undetermined" in addition to the wired device 81 and the wireless device 82. That is, the discrimination processing unit 74 includes the discrimination result of "undetermined" in addition to the discrimination result that the connected device is the wired device 81 or the connected device is the wireless device 82. As a result, until the connected device is determined to be the wired device 81/wireless device 82, the discrimination result for the connected device is undetermined, and the discrimination of the connected device can be continued.

More specifically, the discrimination processing unit 74 performs pre-discrimination, discriminates that the device is the wired device 81 (undetermined) in the pre-discrimination, and determines the discrimination result of the wired device 81 only when the device is discriminated to be the wired device 81 in a further discrimination process. Similarly, the discrimination processing unit 74 performs pre-discrimination, discriminates the wireless device 82 (undetermined) in the pre-discrimination, and determines the discrimination result of the wireless device 82 only when the wireless device 82 is discriminated in a further discrimination process. In a case where the wireless device 82 is discriminated in the discrimination process after the wired device 81 (undetermined) is discriminated in the pre-discrimination, the state transitions to the state of the wireless device 82 (undetermined). Similarly, in a case where the wired device 81 is discriminated in the discrimination process after the wireless device 82 (undetermined) is discriminated in the pre-discrimination, the state transitions to the state of the wired device 81 (undetermined).

In the present embodiment, the work vehicle 1 (work machine) is set according to the discrimination result for the connected device. That is, as described above, since the calibration values of the first travel operation unit 801, the second travel operation unit 802, and the like are different between the wired device 81 and the wireless device 82, the discrimination processing unit 74 sets the calibration values according to, for example, the discrimination result. As a result, even if the user (operator) does not perform the setting according to the connected device, an appropriate setting is automatically performed according to the connected device, so that the user's time and effort are reduced.

Furthermore, in the present embodiment, when the operation device 8 is abnormal, the display processing unit 78 displays error screens Dp11 and Dp12 (see Fig. 13) on, for example, the display unit 211 of the client terminal 210 or the display unit 611 of the user interface 61. Here, the display content (an error code or the like) of the error screens Dp11 and Dp12 differs depending on whether the operation device 8 (connected device) is the wired device 81 or the wireless device 82. Therefore, the discrimination processing unit 74 also performs setting of the work vehicle 1 related to the error screens Dp11 and Dp12 according to the discrimination result for the connected device.

As an example, as shown in Fig. 13, "at the time of wired device connection" in which the wired device 81 is connected to the connection unit 80, the display processing unit 78 displays the error screen Dp11 when the operation device 8 is abnormal. On the other hand, "at the time of wireless device connection" in which the wireless device 82 is connected to the connection unit 80, the display processing unit 78 displays the error screen Dp12 when the operation device 8 is abnormal.

As described above, in the control method according to the present embodiment, the information displayed on the display unit 211 (or the display unit 611) or the like (error screens Dp11 and Dp12) varies depending on the discrimination result as to whether the connected device is the wired device 81 or the wireless device 82. In particular, by making the error screens Dp11 and Dp12 different depending on the connected device, correct information regarding the abnormality of the operation device 8 is presented to the operator, and it becomes easy to take necessary measures.

In addition, in a case where the discrimination result by the discrimination processing unit 74 is "undetermined" and an abnormality of the operation device 8 is detected, the display processing unit 78 displays that the discrimination result for the connected device (operation device 8) is "undetermined". That is, when the discrimination result is "undetermined", an error screen different from the case where the discrimination result is determined as the wired device 81/wireless device 82 is displayed.

### Recovery process

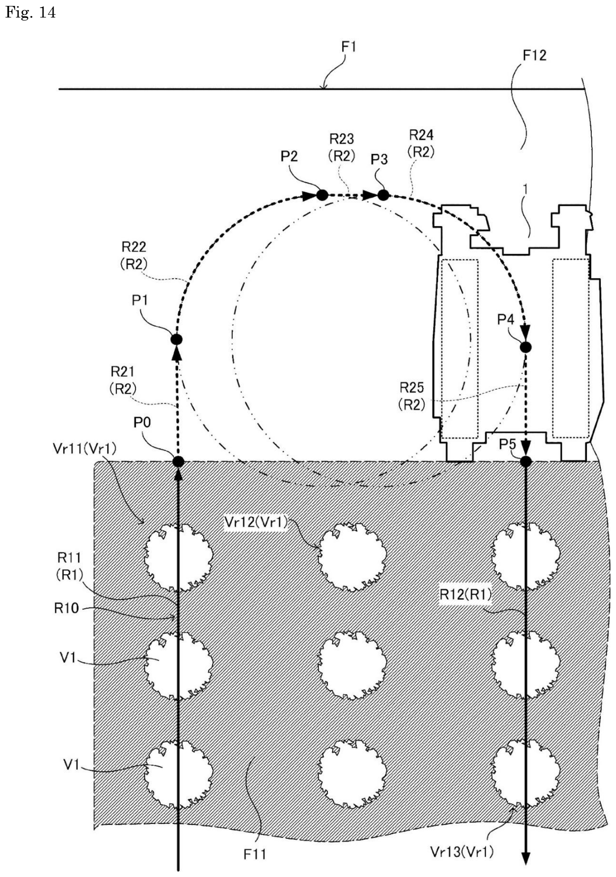

Next, a recovery process mainly performed by the recovery processing unit 75 among control methods (travel control methods) related to travel of the work vehicle 1 will be described with reference to Figs. 14 to 19.

That is, in the control method according to the present embodiment, by correcting the deviation including at least one of the position deviation and the azimuth deviation of the work vehicle 1, even when the work vehicle 1 deviates from the target path R10, the work vehicle 1 can be returned to the target path R10 and the automatic travel of the work vehicle 1 can be continued. However, when the work vehicle 1 located at the position where the deviation from the target path R10 is found (a position where the deviation exceeds a threshold) is returned (enters) to the target path R10 from the entry position of the target path R10, there is a case where the work vehicle 1 cannot smoothly enter the target path R10 as it is.

Therefore, even in such a case, in order to cause the work vehicle 1 to smoothly enter the target path R10 from the entry position of the target path R10, the recovery processing unit 75 first sets a recovery position to be a virtual target position on an extension line of the entry position in the target path R10, and moves the work vehicle 1 to the recovery position. As a result, the work vehicle 1 can smoothly enter (return to) the target path R10 from the entry position only by being moved from the recovery position to the entry position of the target path R10 along the extension line of the target path R10.

Specifically, when the deviation including at least one of the position deviation or the azimuth deviation of the work vehicle 1 with respect to the target path R10 exceeds a threshold, the recovery processing unit 75 performs a recovery process (correction operation) of correcting the deviation. That is, in a case where the work vehicle 1 greatly deviates from the target path R10, the recovery processing unit 75 first moves the work vehicle 1 to the recovery position on the extension line of the work path R1 of the target path R10 in order to return the work vehicle 1 from the entry position of the target path R10 to the target path R10. As a result, the work vehicle 1 can be moved forward from the recovery position to the entry position of the target path R10 along the extension line of the work path R1, and smoothly enter (return to) the target path R10 from the entry position.

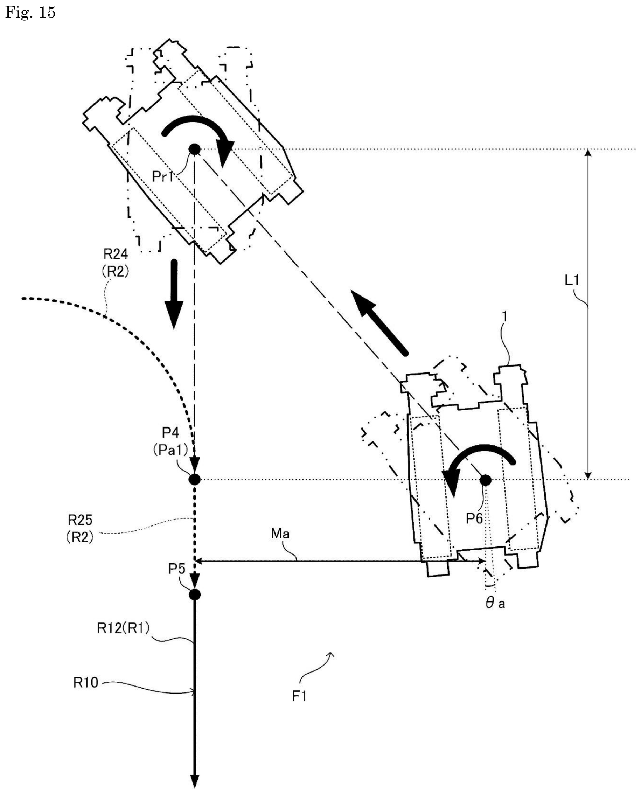

Hereinafter, the basic recovery process performed by the recovery processing unit 75 will be described with reference to Figs. 14 and 15.

Here, as shown in Fig. 14, it is assumed that the travel processing unit 72 moves the work vehicle 1 from the work path R11 of the crop row Vr11 to the work path R12 of the crop row Vr13 along the target path R10. Here, the end position P0 of the work path R11 and the start position P5 of the work path R12 are connected by the movement path R2. The movement path R2 can be divided into a straight path R21, a turning path R22, a straight path R23, a turning path R24, and a straight path R25 in order from the work path R11 side. In other words, the movement path R2 includes the straight path R21, the turning path R22, the straight path R23, the turning path R24, and the straight path R25.

In the example in Fig. 14, the work vehicle 1 that automatically travels along the target path R10 performs work travel on the work path R11. When the work vehicle 1 reaches the end position P0 of the work path R11, the work vehicle 1 stops the work (spreading work), travels straight on the straight path R21, and starts turning at the end position P1. When the work vehicle 1 starts turning, the work vehicle 1 moves on the turning path R22, the straight path R23, and the turning path R24, travels straight on the straight path R25 from the turning end position P4, and when the work vehicle 1 reaches the starting end position P5 of the next work path R12, the work vehicle 1 resumes the work (spreading work) and performs work travel on the work path R12. In Fig. 14, the turning path R22 and the turning path R24 have the same turning radius.

While the work vehicle 1 automatically travels along the target path R10 as described above, the recovery processing unit 75 detects a deviation (a position deviation and/or an azimuth deviation) of the work vehicle 1. Specifically, the recovery processing unit 75 detects a position deviation and an azimuth deviation of the work vehicle 1 with respect to the target path R10 on the basis of positioning information (the current position and the current azimuth) obtained by the positioning device 2. The position deviation is a lateral deviation, that is, an amount of deviation of the current position of the work vehicle 1 from the target path R10 in a direction orthogonal to the target path R10, and the azimuth deviation is an azimuth angle deviation, that is, an amount of deviation of the advancing direction (azimuth) of the work vehicle 1 from the target path R10.

The recovery processing unit 75 determines whether or not the detected position deviation exceeds a preset threshold (position threshold). In a case where the position deviation exceeds the position threshold, the recovery processing unit 75 executes a recovery process for correcting the position deviation. Further, the recovery processing unit 75 determines whether or not the detected azimuth deviation exceeds a preset threshold (azimuth threshold). In a case where the azimuth deviation exceeds the azimuth threshold, the recovery processing unit 75 executes a recovery process for correcting the azimuth deviation. The position threshold and the azimuth threshold are set in advance in the client terminal 210, for example. Each of the position threshold and the azimuth threshold is an example of a "threshold" for the deviation.

On the other hand, Fig. 15 shows a case where the work vehicle 1 deviates from the target path R10. Fig. 15 shows a part of the target path R10 including the turning path R24 and the straight path R25 shown in Fig. 14. Here, it is assumed that the work vehicle 1 deviates from the turning path R24 of the target path R10, and a position deviation Ma exceeds the position threshold and an azimuth deviation θa exceeds the azimuth threshold at a position P6 of a distance Ma (position deviation) from the turning end position P4.

In this case, the recovery processing unit 75 sets a recovery position Pr1 serving as a virtual target position at a position on an extension line of the straight path R25. At the position P6, the recovery processing unit 75 spin-turns the work vehicle 1 so that the rear side faces the recovery position Pr1. Here, the recovery position Pr1 is a position at a distance L1 (for example, 2 m) from the turning end position P4 in the extension direction of the straight path R25.

Next, the recovery processing unit 75 moves the work vehicle 1 backward until the work vehicle 1 reaches the recovery position Pr1. At the recovery position Pr1, the recovery processing unit 75 spin-turns the work vehicle 1 until the azimuth deviation of the work vehicle 1 with respect to the extension direction of the straight path R25 becomes equal to or less than the azimuth threshold.

As a result, the travel processing unit 72 can cause the work vehicle 1 to enter (return) the target path R10 (straight path R25) from the turning end position P4 only by moving the work vehicle 1 forward (straight) from the recovery position Pr1 to the turning end position P4 along the extension line of the straight path R25. Thereafter, the travel processing unit 72 causes the work vehicle 1 to travel straight on the straight path R25 and enter the work path R12 from the starting end position P5. That is, in the example in Fig. 15, the turning end position P4 is an example of the "entry position" on the target path R10.

Incidentally, in the recovery process as described above, the work vehicle 1 is moved in a direction away from the entry position of the target path R10 (toward the outside of the agricultural land F1), so that the work vehicle 1 can enter the target path R10 from the entry position. Therefore, since a relatively wide space (the non-work region F12 as a headland region) is required in the outer peripheral portion of the agricultural land F1 (work site), there is a possibility that the agricultural land F1 (work site) in which the recovery process can be performed is limited. Therefore, in the control method (travel control method) according to the present embodiment, by adopting the configuration described below, the travel control method, the travel control program, and the (travel) control system 100 of the work vehicle 1, and the work vehicle 1 that can easily alleviate a limitation on the agricultural land F1 (work site) in which the recovery process can be performed are realized.

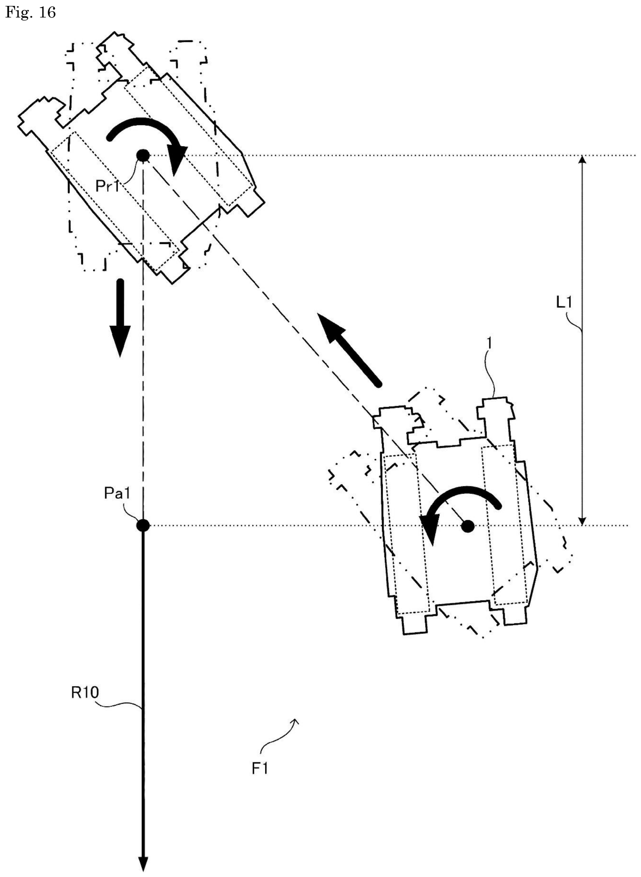

That is, the travel control method according to the present embodiment includes causing the work vehicle 1 to automatically travel along the target path R10 in the agricultural land F1 (work site) and performing a recovery process. As shown in Fig. 16, the recovery process is a process of moving the work vehicle 1 to the recovery position Pr1 in a case where a deviation including at least one of a position deviation and an azimuth deviation of the work vehicle 1 with respect to the target path R10 exceeds a threshold when the work vehicle 1 enters the target path R10 from the entry position Pa1 of the target path R10. The recovery position Pr1 is a position where the deviation is reduced (from the entry position Pa1) and entry into the target path R10 can be started. In the recovery process, the distance from the entry position Pa1 of the target path R10 to the recovery position Pr1 is designated as a recovery distance L1, and the recovery position Pr1 is determined according to the recovery distance L1.

That is, when executing the recovery process of moving the work vehicle 1 to the recovery position Pr1, the recovery processing unit 75 of the control device 7 determines the recovery position Pr1 according to the recovery distance L1 which is the distance from the entry position Pa1 to the recovery position Pr1. As a result, how far the work vehicle 1 is moved backward from the entry position Pa1 to the recovery position Pr1 can be designated as the recovery distance L1. Therefore, for example, by designating the recovery distance L1 to be short, the recovery process can be executed even in the agricultural land F1 (work site) having no margin in the space of the outer peripheral portion (the non-work region F12 as a headland region). As a result, according to the travel control method of the present embodiment, it is easy to alleviate the restriction of the agricultural land F1 (work site) where the recovery process can be performed.

In short, in the example in Fig. 15, by designating the recovery distance L1, the recovery position Pr1 is specified from the entry position Pa1 (turning end position P4) and the recovery distance L1. In the recovery process, the recovery processing unit 75 moves the work vehicle 1 toward the recovery position Pr1 specified from the recovery distance L1 as described above.

In the present embodiment, the recovery processing unit 75 designates the recovery distance L1 according to an operation of a user (operator). As a result, the recovery distance L1 can be flexibly designated according to the situation, for example, by shortening the recovery distance L1 in the agricultural land F1 (work site) where there is no margin in the space of the outer peripheral portion (the non-work region F12 as a headland region).

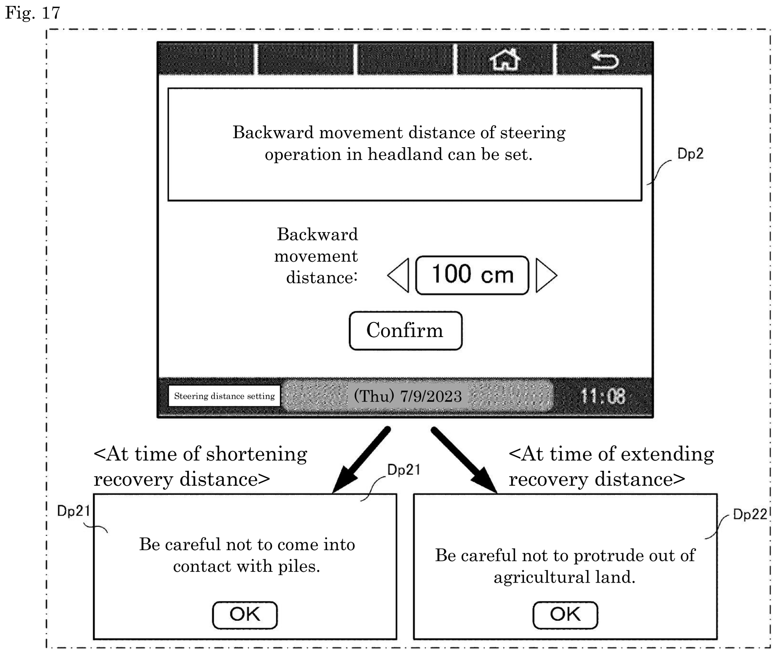

Specifically, an operation of setting the recovery distance L1 by the user (operator) is received on a recovery distance setting screen Dp2 as exemplified in Fig. 17. The recovery distance setting screen Dp2 is a screen displayed on the display unit 211 of the client terminal 210, the display unit 611 of the user interface 61, or the like by the display processing unit 78, for example.

On the recovery distance setting screen Dp2, a message prompting the user (operator) to set the recovery distance L1 (backward movement distance) in the recovery process (a steering operation in the headland), such as "The backward movement distance of the steering operation in the headland can be set"., is displayed. On the recovery distance setting screen Dp2, a "backward movement distance" (recovery distance L1) that can be changed by operating a cursor key is displayed. The recovery distance L1 may be set in increments of a predetermined length (for example, 10 cm) within a range from a lower limit value (for example, 20 cm) to an upper limit value (for example, 150 cm). The recovery distance L1 set on the recovery distance setting screen Dp2 is stored in a nonvolatile memory, and is retained even when the power of the work vehicle 1 is turned off.

Further, when the recovery distance L1 is changed from the previous value on the recovery distance setting screen Dp2, confirmation screens Dp21 and Dp22 are displayed as exemplified in Fig. 17. The confirmation screens Dp21 and Dp22 are popped up on the recovery distance setting screen Dp2 by the display processing unit 78, for example. Here, it is preferable that the confirmation screen Dp21 in a case where the recovery distance L1 is shortened and the confirmation screen Dp22 in a case where the recovery distance L1 is extended have different contents. In the example in Fig. 17, the confirmation screen Dp21 has content for calling attention to contact with the pile located at the end of the crop row Vr1, whereas the confirmation screen Dp22 has content for calling attention to protrusion from the agricultural land F1.

In the travel control method according to the present embodiment, the recovery distance L1 is not fixed to the value set by the user (operator) as described above, but the recovery distance L1 can be automatically changed. That is, the recovery processing unit 75 can change the recovery distance L1 by shortening or extending the recovery distance L1.

Here, the recovery processing unit 75 basically changes the recovery distance L1 before starting the recovery process (moving the work vehicle 1 to the recovery position Pr1) so that the work vehicle 1 does not protrude from the agricultural land F1 (work site). That is, at the currently designated recovery distance L1, in a case where the recovery position Pr1 protrudes outside the agricultural land F1, the recovery processing unit 75 shortens the recovery distance L1 to prevent the work vehicle 1 from protruding from the agricultural land F1 in the recovery process.

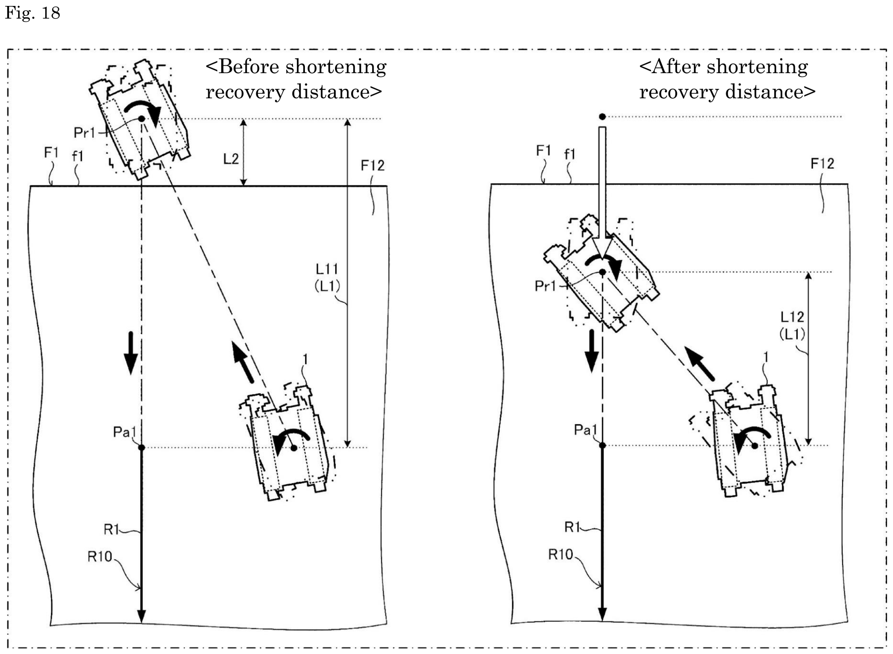

Therefore, first, in a case where the recovery position Pr1 is outside the agricultural land F1 (work site), the recovery distance L1 is shortened. That is, as shown on the left part of Fig. 18, in a case where the recovery distance L11 is too long with respect to the non-work region F12 as a headland region and the recovery position Pr1 is located outside the agricultural land F1, the recovery distance L12 is shortened as shown on the right part of Fig. 18 (L11 > L12). The recovery processing unit 75 specifies the recovery position Pr1 using the shortened recovery distance L12, and executes the recovery process of moving the work vehicle 1 to the recovery position Pr1.

As a result, by shortening the recovery distance L1, the recovery position Pr1 can be accommodated in the agricultural land F1, and the work vehicle 1 hardly protrudes from the agricultural land F1 during the recovery process.

Furthermore, in this case, the recovery distance L1 is preferably shortened on the basis of a protrusion amount L2 of the recovery position Pr1 from an outer peripheral edge f1 of the agricultural land F1 (work site). In short, as shown on the left part of Fig. 18, in a case where the recovery position Pr1 is located outside the agricultural land F1 at the currently designated recovery distance L1, the recovery processing unit 75 determines the reduction amount of the recovery distance L1 according to the protrusion amount L2 which is the distance from the recovery position Pr1 to the outer peripheral edge f1 of the agricultural land F1.

Here, the recovery processing unit 75 increases the reduction amount of the recovery distance L1 as the protrusion amount L2 increases to shorten the recovery distance L1 after the reduction, and decreases the reduction amount of the recovery distance L1 as the protrusion amount L2 decreases to lengthen the recovery distance L1 after the reduction. As a result, it is possible to suppress the recovery distance L1 from becoming shorter than necessary.

More preferably, before the recovery processing unit 75 starts the recovery process (moves the work vehicle 1 to the recovery position Pr1), the determination processing unit 76 determines whether or not the work vehicle 1 protrudes from the agricultural land F1. In a case where the work vehicle 1 protrudes from the agricultural land F1 in the recovery process, the recovery processing unit 75 shortens the recovery distance L1.

Specifically, the determination processing unit 76 determines whether or not the work vehicle 1 protrudes from the agricultural land F1 when the work vehicle 1 is moved to the recovery position Pr1 in the recovery process (backward movement) and when the work vehicle 1 is turned (spin-turned) at the recovery position Pr1. The determination processing unit 76 determines whether or not the work vehicle 1 protrudes from the agricultural land F1 according to whether or not a line segment connecting an end point of the base machine 10 and an expected stop position of the end point intersects the outer peripheral edge f1 of the agricultural land F1. In a case where it is determined that the work vehicle 1 protrudes from the agricultural land F1, the recovery processing unit 75 shortens the recovery distance L1 according to the protrusion amount. Further, the determination processing unit 76 redetermines whether or not the work vehicle 1 protrudes from the agricultural land F1 in the recovery process by using the shortened recovery distance L1. As a result of the redetermination, the determination process and the reduction of the recovery distance L1 are repeatedly executed until it is determined that the work vehicle 1 does not protrude from the agricultural land F1. However, when the recovery distance L1 reaches the lower limit value, the recovery process is started with the recovery distance L1 as the lower limit value.

The travel control method according to the present embodiment further includes notifying when the recovery position Pr1 is outside the agricultural land F1 (work site). That is, as shown on the left part of Fig. 18, in a case where the recovery position Pr1 is located outside the agricultural land F1 at the currently designated recovery distance L1, the recovery processing unit 75 performs notification by display, light, sound, or a combination thereof. As a result, notification is performed according to the process of shortening the recovery distance L1.

Further, the recovery distance L1 is shortened within a range not falling below the lower limit value. In short, a lower limit value (20 cm as an example) is set as the recovery distance L1 as described above, and even in a case where the recovery processing unit 75 automatically shortens the recovery distance L1, the recovery distance L1 is shortened within a range not falling below the lower limit value. Therefore, it is possible to suppress the recovery distance L1 from becoming too short.

The target path R10 includes a plurality of work paths R1 along the work target rows (crop rows Vr1). The recovery distance L1 is designated for each work path R1. As a result, for example, even in a case where the distance from the end of the crop row Vr1 to the outer peripheral edge f1 of the agricultural land F1 is different for each work path R1, it is possible to set the recovery distance L1 suitable for each crop row Vr1 and as long as possible.

Furthermore, in the travel control method according to the present embodiment, protrusion of the work vehicle 1 from the agricultural land F1 (work site) is monitored even during execution of the recovery process. That is, when the recovery processing unit 75 executes the recovery process and moves the work vehicle 1 to the recovery position Pr1, the determination processing unit 76 determines whether or not the work vehicle 1 protrudes from the agricultural land F1.

Specifically, during execution of the recovery process, the determination processing unit 76 determines whether or not the work vehicle 1 protrudes from the agricultural land F1 according to whether or not a line segment connecting an end point of the base machine 10 and an expected stop position of the end point intersects the outer peripheral edge f1 of the agricultural land F1. In a case where it is determined that the work vehicle 1 protrudes from the agricultural land F1 in the middle of the recovery process (while the work vehicle 1 is being moved to the recovery position Pr1), the recovery processing unit 75 stops the work vehicle 1 at that time and sets the stop position as the recovery position Pr1.

In short, in the present embodiment, when the work vehicle 1 protrudes from the agricultural land F1 (work site) in the middle of the recovery process, the position of the work vehicle 1 at the time of the protrusion is set as the recovery position Pr1, and the work vehicle 1 starts to enter the target path R10. As a result, it is possible to suppress the work vehicle 1 from greatly protruding from the agricultural land F1 in the middle of the recovery process.

Further, after stopping the work vehicle 1 and before starting the entry of the work vehicle 1 into the target path R10, the recovery processing unit 75 turns (spin-turns) the work vehicle 1 as necessary to direct the direction of the work vehicle 1 to the entry position Pa1. That is, in the recovery process, the work vehicle 1 that has reached the recovery position Pr1 is turned toward the entry position Pa1 of the target path R10. Therefore, the work vehicle 1 can enter the target path R10 from the entry position Pa1 only by traveling straight (forward) from the recovery position Pr1.

Here, in the travel control method according to the present embodiment, it is determined whether the work vehicle 1 protrudes from the agricultural land F1 (work site) even when the work vehicle 1 turns from the recovery position Pr1. Therefore, even during the turning at the recovery position Pr1, it is possible to suppress the work vehicle 1 from greatly protruding from the agricultural land F1.

In particular, in the present embodiment, when the work vehicle 1 protrudes from the agricultural land F1 (work site) at the time of turning of the work vehicle 1 from the recovery position Pr1, the turning of the work vehicle 1 is stopped, and the work vehicle 1 is moved forward or backward. As a result, even during the turning at the recovery position Pr1, it is possible to suppress the work vehicle 1 from protruding from the agricultural land F1. Alternatively, whether or not the work vehicle 1 protrudes from the agricultural land F1 at the time of turning of the work vehicle 1 from the recovery position Pr1 may be determined in advance, for example, before the work vehicle 1 reaches the recovery position Pr1. In a case where the work vehicle 1 is expected to protrude from the agricultural land F1 at the time of turning, the recovery processing unit 75 may shorten the recovery distance L1 according to the protrusion amount.

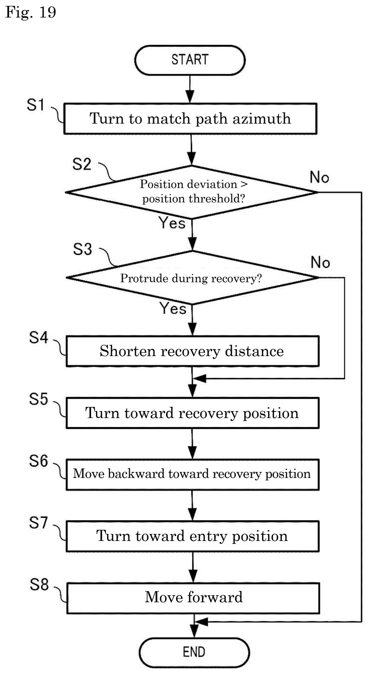

Fig. 19 is a flowchart showing an example of processing related to the recovery process in the travel control method according to the present embodiment.

First, when the deviation including at least one of the position deviation and the azimuth deviation exceeds a threshold, the recovery processing unit 75 stops the work vehicle 1 on the spot and then turns (spin-turns) the work vehicle 1 in such a manner as to reduce the azimuth deviation, that is, to match the azimuth of the target path R10 (S1).

The recovery processing unit 75 determines whether or not the position deviation exceeds the position threshold (S2), and if the position deviation is equal to or less than the position threshold (S2: No), a series of processes related to the recovery process is ended. On the other hand, when the position deviation exceeds the position threshold (S2: Yes), the recovery processing unit 75 causes the process to proceed to step S3.

In step S3, before actually moving the work vehicle 1 to the recovery position Pr1, when the work vehicle 1 is moved backward to the recovery position Pr1 specified by the currently designated recovery distance L1, the recovery processing unit 75 determines whether the work vehicle 1 protrudes from the agricultural land F1. In this case, for example, when it is determined that the work vehicle 1 protrudes from the agricultural land F1 such as the recovery position Pr1 being outside the agricultural land F1 (S3: Yes), the recovery processing unit 75 shortens the recovery distance L1 (S4). In this case, the recovery processing unit 75 shortens the recovery distance L1 on the basis of, for example, the amount of protrusion of the work vehicle 1 from the outer peripheral edge f1 of the agricultural land F1. On the other hand, when the work vehicle 1 does not protrude from the agricultural land F1 (S3: No), the recovery processing unit 75 skips step S4 and causes the process to proceed to step S5.

In step S5, the recovery processing unit 75 turns (spin-turns) the work vehicle 1 toward the recovery position Pr1 specified from the recovery distance L1. The recovery processing unit 75 moves the work vehicle 1 backward toward the recovery position Pr1 until the work vehicle 1 reaches the recovery position Pr1 (S6). When the work vehicle 1 reaches the recovery position Pr1, the recovery processing unit 75 turns (spin-turns) the work vehicle 1 toward the entry position Pa1 of the target path R10 (S7).

Thereafter, the travel processing unit 72 moves the work vehicle 1 forward toward the entry position Pa1 to cause the work vehicle 1 to enter the target path R10 from the entry position Pa1 (S8).

The control system 100 repeatedly executes the processes in steps S1 to S8. However, the flowchart shown in Fig. 19 is merely an example, and processing may be added or omitted as appropriate, or the order of processing may be changed as appropriate.

### Setting process for recovery advancing direction

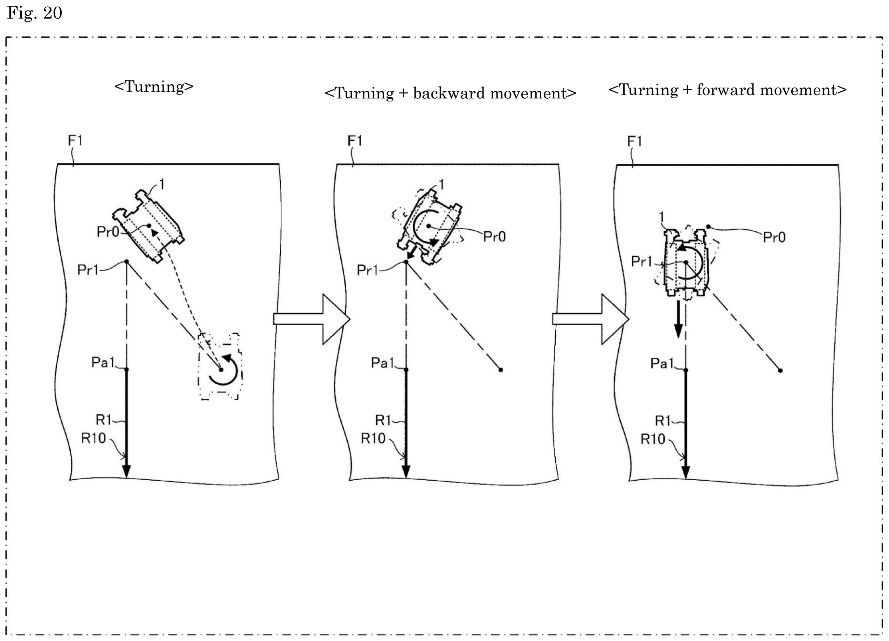

Next, a setting process for the recovery advancing direction mainly performed by the recovery processing unit 75 in the control method (travel control method) related to the travel of the work vehicle 1 will be described with reference to Figs. 20 to 22.

In the recovery process as described above, in order to move (backward) the work vehicle 1 toward the recovery position Pr1, the recovery processing unit 75 first spin-turns the work vehicle 1 so that the rear side of the base machine 10 faces the recovery position Pr1. In this case, ideally, only the orientation (azimuth) is to be changed without changing the position of the work vehicle 1, but for example, slip or the like occurs in the work vehicle 1 due to the influence of an inclined surface, a muddy surface, a step (including a depression), or the like of the agricultural land F1, it is difficult to turn the work vehicle 1 on the spot, and the position of the work vehicle 1 may greatly deviate (from the start position of the recovery process) when turning is finished. In particular, when the recovery distance L1 is short, the turning angle of the spin-turning becomes large, so that the position deviation of the work vehicle 1 is likely to occur during the spin-turning.

Similarly, when the work vehicle 1 reaches the recovery position Pr1, in order to move (forward) the work vehicle 1 toward the entry position Pa1 next, the recovery processing unit 75 spin-turns the work vehicle 1 so that the front side of the base machine 10 faces the entry position Pa1. In this case, ideally, only the orientation (azimuth) is to be changed without changing the position of the work vehicle 1, but for example, slip or the like occurs in the work vehicle 1 due to the influence of an inclined surface, a muddy surface, a step (including a depression), or the like of the agricultural land F1, it is difficult to turn the work vehicle 1 on the spot, and the position of the work vehicle 1 may greatly deviate (from the recovery position Pr1) when turning is finished.

Fig. 20 shows an example in which the position of the work vehicle 1 greatly deviates (from the start position of the recovery process) when the work vehicle 1 is spin-turned so that the rear side of the base machine 10 faces the recovery position Pr1. As indicated by "turning" in Fig. 20, it is assumed that, as a result of the position of the work vehicle 1 greatly deviating at the time of the first spin-turn in the recovery process, the work vehicle 1 is moved past (passes) the recovery position Pr1 while performing the spin-turn, and the spin-turn is completed at the actual position Pr0. When the work vehicle 1 at such an actual position Pr0 is moved to the recovery position Pr1, in order to move the work vehicle 1 backward to the recovery position Pr1, it is necessary to reverse (turn) the direction of the work vehicle 1 by approximately 180 degrees, which is inefficient. That is, assuming that the work vehicle 1 is always moved backward toward the recovery position Pr1, in a case where the work vehicle 1 is located at the actual position Pr0 after the work vehicle 1 is moved past the recovery position Pr1 as shown in Fig. 20, the work vehicle 1 is turned in such a manner as to reverse the direction of the work vehicle 1 by approximately 180 degrees and then moved backward to the recovery position Pr1 (turning + backward movement). Further, the work vehicle 1 that has reached the recovery position Pr1 is spin-turned at the recovery position Pr1 in such a manner as to be reversed by approximately 180 degrees, and is moved forward toward the entry position Pa1 (turning + forward movement).

As described above, when the number of turns (spin-turns) increases and the turning angle also increases, the time required for the turning increases and the agricultural land F1 is likely to be rough. Therefore, in the control method (travel control method) according to the present embodiment, the travel control method, the travel control program, and the (travel) control system 100 of the work vehicle 1, and the work vehicle 1 that can easily perform the recovery process efficiently are realized by adopting the configuration described below.

That is, the travel control method according to the present embodiment includes causing the work vehicle to automatically travel along the target path in the agricultural land F1 (work site) and performing the recovery process. As described above, the recovery process is a process of moving the work vehicle 1 to the recovery position Pr1 and further moving the work vehicle 1 from the recovery position Pr1 to the entry position Pa1 in a case where the deviation including at least one of the position deviation and the azimuth deviation of the work vehicle 1 with respect to the target path R10 exceeds the threshold when the work vehicle 1 enters the target path R10 from the entry position Pa1 of the target path R10. The recovery position Pr1 is a position where the deviation is reduced (from the entry position Pa1) and entry into the target path R10 can be started. In the recovery process, the recovery advancing direction, which is the advancing direction of the work vehicle 1 until reaching the target position, is set according to at least the positional relationship between the actual position Pr0 of the work vehicle 1 and the next target position.

Here, the "next target position" is a current target position to which the work vehicle 1 is to be moved in the recovery process, and is, for example, the recovery position Pr1 or the entry position Pa1. That is, in the present embodiment, the recovery process is roughly divided into a first section for moving the work vehicle 1 from the start position of the recovery process to the recovery position Pr1 and a second section for moving the work vehicle 1 from the recovery position Pr1 to the entry position Pa1. The "target position" in the first section is the recovery position Pr1, and the "target position" in the second section is the entry position Pa1.

By default, the recovery processing unit 75 moves the work vehicle 1 backward toward the recovery position Pr1 which is the target position in the first section, and moves the work vehicle 1 forward toward the entry position Pa1 which is the target position in the second section. In the present embodiment, the advancing direction (recovery advancing direction) of the work vehicle 1 until reaching such a target position is not fixed as it is by default, but is dynamically set according to the positional relationship between the actual position Pr0 of the work vehicle 1 and the target position (the recovery position Pr1 or the entry position Pa1).

That is, even if a significant position deviation of the work vehicle 1 occurs in the spin-turning before the first section or the spin-turning before the second section, the recovery processing unit 75 of the control device 7 sets the advancing direction (recovery advancing direction) of the work vehicle 1 to either forward or backward depending on at least the positional relationship between the actual position Pr0 and the target position. As a result, in the first section of the recovery process, the work vehicle 1 is not always moved backward toward the target position (recovery position Pr1), but is switched between forward movement and backward movement. Similarly, in the second section of the recovery process, the work vehicle 1 is not always moved forward toward the target position (entry position Pa1), but is switched between forward movement and backward movement. Therefore, the travel control method according to the present embodiment has an advantage that the recovery process is easily performed efficiently.

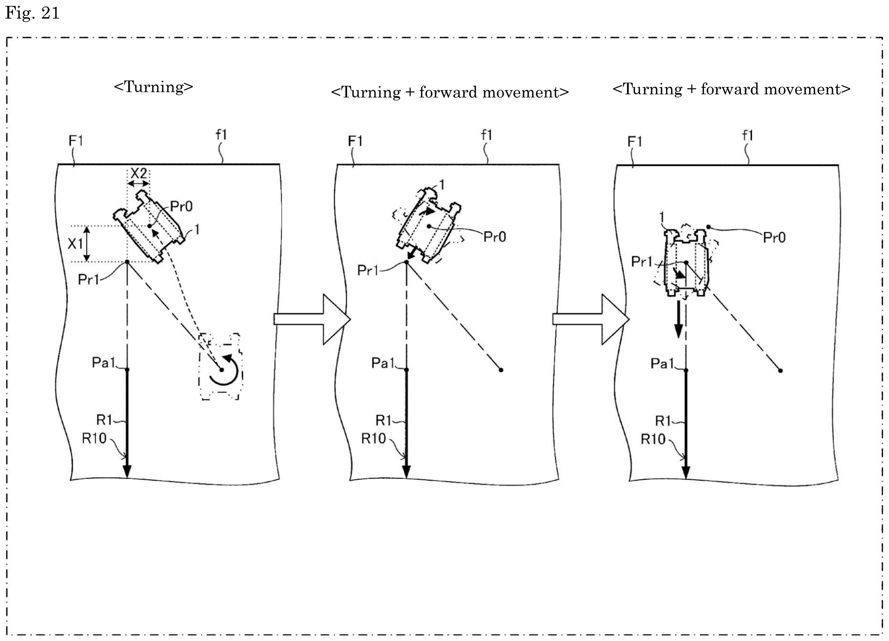

As an example, Fig. 21 shows an example in which the position of the work vehicle 1 greatly deviates (from the start position of the recovery process) at the time of the spin-turn (that is, the first time in the recovery process) immediately before the first section for moving the work vehicle 1 from the start position of the recovery process to the recovery position Pr1. As indicated by "turning" in Fig. 21, it is assumed that, at the time of the first spin-turn in the recovery process, as a result of the position of the work vehicle 1 greatly deviating, the work vehicle 1 is moved while performing the spin-turn, the work vehicle 1 is moved past (passes) the recovery position Pr1, and the spin-turn is completed at the actual position Pr0.

When the work vehicle 1 at such an actual position Pr0 is moved to the next target position (recovery position Pr1), in a case where the work vehicle 1 is located at the actual position Pr0 after the work vehicle 1 is moved past the recovery position Pr1, the recovery processing unit 75 sets the recovery advancing direction according to the positional relationship between the actual position Pr0 and the target position (recovery position Pr1). In the example in Fig. 21, in the extension direction of the target path R10, the actual position Pr0 is a position shifted from the target position (recovery position Pr1) to the side opposite to the entry position Pa1 by a distance X1. In the orthogonal direction orthogonal to the extension direction of the target path R10, the actual position Pr0 is a position shifted to the front side by a distance X2 with respect to the target position (recovery position Pr1).

In this case, the recovery processing unit 75 switches the recovery advancing direction from the default backward movement to the forward movement by setting the recovery advancing direction to "forward movement". The recovery processing unit 75 turns the work vehicle 1 (clockwise in the drawing) and then moves the work vehicle 1 forward to the target position (recovery position Pr1) (turning + forward movement). Further, the recovery processing unit 75 turns (counterclockwise in the drawing) the work vehicle 1 reaching the target position (recovery position Pr1) and then moves the work vehicle 1 forward toward the entry position Pa1 (turning + forward movement).

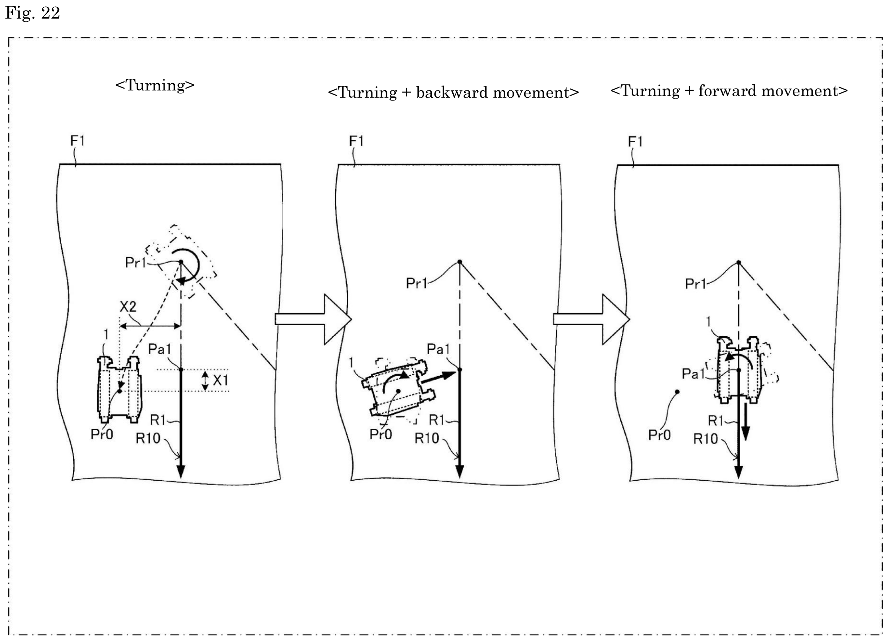

On the other hand, Fig. 22 shows an example in which the position of the work vehicle 1 greatly deviates (from the recovery position Pr1) at the time of the spin-turning (that is, the second time in the recovery process) immediately before the second section for moving the work vehicle 1 from the recovery position Pr1 to the entry position Pa1. As indicated by "turning" in Fig. 22, it is assumed that, as a result of the position of the work vehicle 1 greatly deviating at the time of the second spin-turn in the recovery process, the work vehicle 1 is moved past (passes) the entry position Pa1 while performing the spin-turn, and the spin-turn is completed at the actual position Pr0.

When the work vehicle 1 located at the actual position Pr0 is moved to the next target position (entry position Pa1), in a case where the work vehicle 1 is located at the actual position Pr0 after the work vehicle 1 is moved past the entry position Pa1, the recovery processing unit 75 sets the recovery advancing direction according to the positional relationship between the actual position Pr0 and the target position (entry position Pa1). In the example in Fig. 22, in the extension direction of the target path R10, the actual position Pr0 is located at a position shifted by the distance X1 to the side opposite to the recovery position Pr1 with respect to the target position (entry position Pa1). In the orthogonal direction orthogonal to the extension direction of the target path R10, the actual position Pr0 is a position shifted by the distance X2 from the target position (entry position Pa1).

In this case, the recovery processing unit 75 switches the recovery advancing direction from the default forward movement to the backward movement by setting the recovery advancing direction to "backward movement". The recovery processing unit 75 turns the work vehicle 1 (clockwise in the drawing) and then moves the work vehicle 1 backward to the target position (entry position Pa1) (turning + backward movement). Further, the recovery processing unit 75 turns (counterclockwise in the drawing) the work vehicle 1 that has reached the target position (entry position Pa1) and then moves the work vehicle 1 forward to enter the target path R10 from the entry position Pa1 (turning + forward movement).

Here, in the recovery process, the recovery advancing direction is set according to an approach direction which is a travel direction from the recovery position Pr1 to the entry position Pa1 of the target path R10 in addition to the positional relationship (between the actual position Pr0 and the next target position). In short, the recovery advancing direction is set in consideration of whether the work vehicle 1 is caused to travel in the approach direction of forward movement or backward movement from the recovery position Pr1 toward the entry position Pa1 of the target path R10. Specifically, the recovery advancing direction is set such that the orientation (azimuth) of the work vehicle 1 when reaching the target position becomes an orientation close to the approach direction. As a result, the turning angle of the work vehicle 1 at the target position can be suppressed to be small.

As described above, in the recovery process, the recovery advancing direction is set according to at least the positional relationship (between the actual position Pr0 and the target position) in the extension direction of the target path R10. As a result, an appropriate recovery advancing direction can be set depending on whether the work vehicle 1 has been moved past the next target position in the extension direction of the target path R10.

As described above, in the recovery process, the recovery advancing direction is set according to at least the positional relationship (between the actual position Pr0 and the target position) in the orthogonal direction orthogonal to the extension direction of the target path R10. As a result, an appropriate recovery advancing direction can be set depending on whether or not the work vehicle 1 has been moved past the next target position in the orthogonal direction of the target path R10.

Further, as described above, in the recovery process, the work vehicle 1 is turned from the actual position Pr0 toward the target position (the recovery position Pr1 or the entry position Pa1). For example, as shown in Fig. 21, the recovery processing unit 75 turns the work vehicle 1 when causing the work vehicle 1 to travel from the actual position Pr0 to the target position (here, the recovery position Pr1) (turning + forward movement). As a result, after turning, the work vehicle 1 can reach the target position even if the work vehicle 1 travels straight from the actual position Pr0 to the target position.

Here, in the recovery process, the turning direction of the work vehicle 1 is set according to the recovery advancing direction. That is, for example, as shown in Fig. 21, the recovery processing unit 75 sets the turning direction (clockwise in the example in Fig. 21) of the work vehicle 1 at the actual position Pr0 in such a manner as to suppress the turning angle of the work vehicle 1 at the actual position Pr0 to less than 180 degrees in consideration of the recovery advancing direction (forward movement in this case). As a result, the turning angle of the work vehicle 1 can be suppressed to be small.

In the travel control method according to the present embodiment, in the recovery process, the recovery advancing direction is set according to the position of the outer peripheral edge f1 of the agricultural land F1 (work site) in addition to the positional relationship (between the actual position Pr0 and the target position). That is, for example, as shown in Fig. 21, the recovery advancing direction is set such that the work vehicle 1 travels to the side opposite to the outer peripheral edge f1 as viewed from the actual position Pr0. This makes it possible to suppress protrusion of the work vehicle 1 to the outside of the agricultural land F1.

The process of setting the recovery advancing direction until reaching the next target position is also performed in the re-recovery process. That is, when performing the re-recovery process, the re-recovery processing unit 77 sets the recovery advancing direction, which is the advancing direction of the work vehicle 1 until reaching the target position, according to at least the positional relationship between the actual position of the work vehicle 1 and the next target position as in the recovery process described above. In the re-recovery process, since the "target position" is the recovery position Pr1, the re-recovery processing unit 77 sets the recovery advancing direction according to the positional relationship between the actual position of the work vehicle 1 and the recovery position Pr1 when performing the re-recovery process.

### [4] Modifications

Modifications of the first embodiment will be described below. The modifications described below can be applied in combination as appropriate.

The control device 7 in the present disclosure includes the computer system. The computer system mainly includes one or more processors and one or more memories as hardware. The processor executes a program recorded in the memory of the computer system to implement a function as the control device 7 in the present disclosure. The program may be recorded in advance in the memory of the computer system, may be provided through a telecommunication line, or may be recorded and provided in a non-transitory recording medium, such as a memory card, an optical disk, or a hard disk drive, that is readable by the computer system. Moreover, some or all of the functional units included in the control device 7 may be configured of an electronic circuit.

Moreover, it is not an essential configuration for the control device 7 that at least some of the functions of the control device 7 are aggregated in one housing. The constituents of the control device 7 may be provided in a plurality of housings in a distributed manner. Conversely, in the control device 7, functions distributed to a plurality of devices (for example, the control device 7 and the client terminal 210) may be integrated in one housing. Furthermore, at least some of the functions of the control device 7 may be achieved by, for example, a cloud (cloud computing).

The work vehicle 1 may be used for work not only in an orchard such as a vineyard or an apple orchard but also in other agricultural lands F1, or work sites other than the agricultural land F1. Furthermore, the spread substance to be spread by the work vehicle 1 is not limited to the chemical solution, and may be, for example, water, a fertilizer, an antiseptic solution, or other liquids, or powder. Similarly, the spread target onto which the spread substance is spread is not limited to grapevines, and may be other crops or objects other than crops (including inorganic substances). Moreover, the work vehicle 1 is not limited to an unmanned vehicle that operates through automatic driving, and the work vehicle 1 may be configured in such a manner as to be operated under control (including remote control) of a person (operator), and may be, for example, a boarding type (manned vehicle) that an operator can board. Even in this case, the work vehicle 1 is provided with the antenna 21 and the like in order to ascertain the current position of the work vehicle 1.

Moreover, the support frame 3 is simply required to be attached to one end of the base machine 10 in the front-rear direction D3, and may be attached at the front of the base machine 10. In this case, the implement 400 supported by the support frame 3 is also disposed not behind but in front of the base machine 10.

The implement 400 (the spreader 401 or the weeding machine) may be mounted on the base machine 10 of the work vehicle 1, and is not necessarily supported by the support frame 3. That is, at least one of the spreader 401 and the weeding machine may be directly supported by the base machine 10 without the support frame 3 interposed therebetween.

Furthermore, specific means of notification and presentation is not limited to display on the display unit 211 of the client terminal 210, and may be display on another display unit, sound, transmission to an external terminal or other means, or a combination thereof.

The work vehicle 1 may include a pair of implements 400 arranged in the front-rear direction D3. As a result, the work vehicle 1 can execute work in each of the pair of implements 400 arranged in the front-rear direction D3, and work efficiency can be improved compared with a case where work is performed only with one of the implements 400. The work vehicle 1 may further include a rotary drive device that generates a rotational force for rotating the support frame 3 with respect to the base machine 10 about the rotation axis Ax1.

Moreover, the base machine 10 is simply required to have the first block 10L and the second block 10R, which are aligned in the left-right direction D2, and the arrangement of the first block 10L and the second block 10R may be reversed in the left-right direction. In other words, the first block 10L provided with, for example, the power source 63 may be located on the right side, and the second block 10R provided with, for example, the user interface 61 may be located on the left side.

Moreover, the travel unit 11 is not limited to a crawler traveling device, and, for example, may be configured in such a manner as to include one or more wheels and travel by rotation of the wheels. Moreover, the travel unit 11 is not limited to a configuration driven by a hydraulic motor, and may be configured in such a manner as to be driven by an electric motor.

Further, the spreader 401 as the implement 400 is not limited to an air-assisted spreader as in the first embodiment, and may be, for example, a spreader of an electrostatic spreading system or a system in which the air-assisted spreading system and the electrostatic spreading system are combined.

Moreover, the power source 63 is not limited to an engine, and may include, for example, a motor (electric motor), or may be a hybrid power source including an engine and a motor.

In the work vehicle 1, the base machine 10 may not have a gate shape, and the entire base machine 10 may travel between a pair of adjacent crop rows Vr1 (work passage). In this case, the work vehicle 1 travels along each work passage without standing aside the crop row Vr1. In this case, spreader 401 performs spreading work by switching among a spreading pattern of spreading a chemical solution in both sides in the left-right direction D2, a spreading pattern of spreading the chemical solution only on the left side, and a spreading pattern of spreading the chemical solution only on the right side.

### [Additional Notes of Invention]

Hereinafter, an outline of the invention extracted from the above-described embodiment will be additionally described. Note that configurations and processing functions described in the following additional notes can be selected to be combined as desired.

### <Additional Note 1>

A travel control method for a work vehicle including:
causing a work vehicle to automatically travel along a target path in a work site; and
performing, in a case where a deviation including at least one of a position deviation and an azimuth deviation of the work vehicle with respect to the target path exceeds a threshold when the work vehicle enters the target path from an entry position of the target path, a recovery process of moving the work vehicle to a recovery position where entry into the target path is allowed to be started by reducing the deviation, in which
in the recovery process, a distance from the entry position of the target path to the recovery position is designated as a recovery distance, and the recovery position is determined according to the recovery distance.

### <Additional Note 2>

The travel control method for a work vehicle according to Additional Note 1, further including:
shortening the recovery distance in a case where the recovery position is outside the work site.

### <Additional Note 3>

The travel control method for a work vehicle according to Additional Note 2, in which
the recovery distance is shortened on the basis of a protrusion amount of the recovery position from an outer peripheral edge of the work site.

### <Additional Note 4>

The travel control method for a work vehicle according to Additional Note 2 or 3, further including:
performing a notification in a case where the recovery position is outside the work site.

### <Additional Note 5>

The travel control method for a work vehicle according to any one of Additional Notes 2 to 4, in which
the recovery distance is shortened within a range not falling below a lower limit value.

### <Additional Note 6>

The travel control method for a work vehicle according to any one of Additional Notes 1 to 5, in which
when the work vehicle protrudes from the work site in the middle of the recovery process, the work vehicle starts to enter the target path with a position of the work vehicle at a point of time at which the work vehicle protrudes as the recovery position.

### <Additional Note 7>

The travel control method for a work vehicle according to any one of Additional Notes 1 to 6, in which
the target path includes a plurality of work paths along respective work target rows, and
the recovery distance is designated for each of the work paths.

### <Additional Note 8>

The travel control method for a work vehicle according to any one of Additional Notes 1 to 7, in which
in the recovery process, the work vehicle that has reached the recovery position is turned toward the entry position of the target path.

### <Additional Note 9>

The travel control method for a work vehicle according to Additional Note 8, further including:
determining whether the work vehicle protrudes from the work site when the work vehicle is turned from the recovery position.

### <Additional Note 10>

The travel control method for a work vehicle according to Additional Note 9, in which
in a case where the work vehicle protrudes from the work site when the work vehicle is turned from the recovery position, turning of the work vehicle is stopped and the work vehicle is moved forward or backward.

### <Additional Note 11>

A travel control method for a work vehicle including:
causing a work vehicle to automatically travel along a target path in a work site; and
performing, in a case where a deviation including at least one of a position deviation and an azimuth deviation of the work vehicle with respect to the target path exceeds a threshold when the work vehicle enters the target path from an entry position of the target path, a recovery process of moving the work vehicle to a recovery position where entry into the target path is allowed to be started by reducing the deviation and further moving the work vehicle from the recovery position to the entry position, in which
in the recovery process, a recovery advancing direction that is an advancing direction of the work vehicle until reaching the target position is set according to at least a positional relationship between an actual position of the work vehicle and a next target position.

### <Additional Note 12>

The travel control method for a work vehicle according to Additional Note 11, in which
in the recovery process, the recovery advancing direction is set according to an approach direction that is a travel direction from the recovery position to the entry position of the target path in addition to the positional relationship.

### <Additional Note 13>

The travel control method for a work vehicle according to Additional Note 11 or 12, in which
in the recovery process, the recovery advancing direction is set according to at least the positional relationship in an extension direction of the target path.

### <Additional Note 14>

The travel control method for a work vehicle according to any one of Additional Notes 11 to 13, in which
in the recovery process, the recovery advancing direction is set according to at least the positional relationship in an orthogonal direction orthogonal to an extension direction of the target path.

### <Additional Note 15>

The travel control method for a work vehicle according to any one of Additional Notes 11 to 14, in which
in the recovery process, the work vehicle is turned from the actual position toward the target position.

### <Additional Note 16>

The travel control method for a work vehicle according to Additional Note 15, in which
in the recovery process, a turning direction of the work vehicle is set according to the recovery advancing direction.

### <Additional Note 17>

The travel control method for a work vehicle according to any one of Additional Notes 11 to 16, in which
in the recovery process, the recovery advancing direction is set according to a position of an outer peripheral edge of the work site in addition to the positional relationship.

### LIST OF REFERENCE SIGNS

1 Work vehicle (work machine)
10 Base machine
72 Travel processing unit
75 Recovery processing unit
100 Control system
F1 Agricultural land (work site)
f1 Outer peripheral edge
Pa1 Entry position (target position)
Pr0 Actual position
Pr1 Recovery position (target position)
R10 Target path
L1, L11, L12 Recovery distance
L2 Amount of protrusion

## Claims

1. A travel control method for a work vehicle comprising:
causing a work vehicle to automatically travel along a target path in a work site; and
performing, in a case where a deviation including at least one of a position deviation and an azimuth deviation of the work vehicle with respect to the target path exceeds a threshold when the work vehicle enters the target path from an entry position of the target path, a recovery process of moving the work vehicle to a recovery position where entry into the target path is allowed to be started by reducing the deviation, wherein
in the recovery process, a distance from the entry position of the target path to the recovery position is designated as a recovery distance, and the recovery position is determined according to the recovery distance.

2. The travel control method for a work vehicle according to claim 1, further comprising:
shortening the recovery distance in a case where the recovery position is outside the work site.

3. The travel control method for a work vehicle according to claim 2, wherein
the recovery distance is shortened on the basis of a protrusion amount of the recovery position from an outer peripheral edge of the work site.

4. The travel control method for a work vehicle according to claim 2 or 3, further comprising:
performing a notification in a case where the recovery position is outside the work site.

5. The travel control method for a work vehicle according to claim 2 or 3, wherein
the recovery distance is shortened within a range not falling below a lower limit value.

6. The travel control method for a work vehicle according to any one of claims 1 to 3, wherein
when the work vehicle protrudes from the work site in the middle of the recovery process, the work vehicle starts to enter the target path with a position of the work vehicle at a point of time at which the work vehicle protrudes as the recovery position.

7. The travel control method for a work vehicle according to any one of claims 1 to 3, wherein
the target path includes a plurality of work paths along respective work target rows, and
the recovery distance is designated for each of the work paths.

8. The travel control method for a work vehicle according to any one of claims 1 to 3, wherein
in the recovery process, the work vehicle that has reached the recovery position is turned toward the entry position of the target path.

9. The travel control method for a work vehicle according to claim 8, further comprising:
determining whether the work vehicle protrudes from the work site when the work vehicle is turned from the recovery position.

10. The travel control method for a work vehicle according to claim 9, wherein
in a case where the work vehicle protrudes from the work site when the work vehicle is turned from the recovery position, turning of the work vehicle is stopped and the work vehicle is moved forward or backward.

11. A travel control method for a work vehicle comprising:
causing a work vehicle to automatically travel along a target path in a work site; and
performing, in a case where a deviation including at least one of a position deviation and an azimuth deviation of the work vehicle with respect to the target path exceeds a threshold when the work vehicle enters the target path from an entry position of the target path, a recovery process of moving the work vehicle to a recovery position where entry into the target path is allowed to be started by reducing the deviation and further moving the work vehicle from the recovery position to the entry position, wherein
in the recovery process, a recovery advancing direction that is an advancing direction of the work vehicle until reaching the target position is set according to at least a positional relationship between an actual position of the work vehicle and a next target position.

12. The travel control method for a work vehicle according to claim 11, wherein
in the recovery process, the recovery advancing direction is set according to an approach direction that is a travel direction from the recovery position to the entry position of the target path in addition to the positional relationship.

13. The travel control method for a work vehicle according to claim 11 or 12, wherein
in the recovery process, the recovery advancing direction is set according to at least the positional relationship in an extension direction of the target path.

14. The travel control method for a work vehicle according to claim 11 or 12, wherein
in the recovery process, the recovery advancing direction is set according to at least the positional relationship in an orthogonal direction orthogonal to an extension direction of the target path.

15. The travel control method for a work vehicle according to claim 11 or 12, wherein
in the recovery process, the work vehicle is turned from the actual position toward the target position.

16. The travel control method for a work vehicle according to claim 15, wherein
in the recovery process, a turning direction of the work vehicle is set according to the recovery advancing direction.

17. The travel control method for a work vehicle according to claim 11 or 12, wherein
in the recovery process, the recovery advancing direction is set according to a position of an outer peripheral edge of the work site in addition to the positional relationship.
